(19) Europäisches Patentamt
European Patent Office
Office européen des brevets

(11) **EP 3 864 746 B1**

(12) **EUROPÄISCHE PATENTSCHRIFT**

(45) Veröffentlichungstag und Bekanntmachung des Hinweises auf die Patenterteilung:
**23.03.2022 Patentblatt 2022/12**

(21) Anmeldenummer: **19809387.4**

(22) Anmeldetag: **08.11.2019**

(51) Internationale Patentklassifikation (IPC):
***H02P 6/182*** *(2016.01)* ***H02P 6/21*** *(2016.01)*
***H02P 6/15*** *(2016.01)*

(52) Gemeinsame Patentklassifikation (CPC):
**H02P 6/182; H02P 6/157; H02P 6/21**

(86) Internationale Anmeldenummer:
**PCT/EP2019/080740**

(87) Internationale Veröffentlichungsnummer:
**WO 2020/099276 (22.05.2020 Gazette 2020/21)**

(54) **VERFAHREN ZUM BESTIMMEN EINER ROTORSTELLUNG EINES BLDC-MOTORS**

METHOD FOR DETERMINING THE ROTOR POSITION OF A BLDC MOTOR

PROCÉDÉ DE DÉTERMINATION D'UNE POSITION DE ROTOR D'UN MOTEUR À COURANT CONTINU SANS BALAI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.11.2018 DE 102018128354**

(43) Veröffentlichungstag der Anmeldung:
**18.08.2021 Patentblatt 2021/33**

(73) Patentinhaber: **Beckhoff Automation GmbH**
**33415 Verl (DE)**

(72) Erfinder: **JEBRAMCIK, Patrick**
**33334 Gütersloh (DE)**

(74) Vertreter: **Patentanwaltskanzlei WILHELM & BECK**
**Prinzenstraße 13**
**80639 München (DE)**

(56) Entgegenhaltungen:
EP-A2- 2 037 567        WO-A2-2012/025904
DE-A1-102014 001 184    US-A1- 2012 049 777

• LI HAITAO ET AL: "Self-Correction of Commutation Point for High-Speed Sensorless BLDC Motor With Low Inductance and Nonideal Back EMF", IEEE TRANSACTIONS ON POWER ELECTRONICS, INSTITUTE OF ELECTRICAL AND ELECTRONICS ENGINEERS, USA, Bd. 32, Nr. 1, 1. Januar 2017 (2017-01-01), Seiten 642-651, XP011623378, ISSN: 0885-8993, DOI: 10.1109/TPEL.2016.2524632 [gefunden am 2016-09-16]
• Reston Condit: "AN1083 Sensorless BLDC Control With Back-EMF Filtering", , 1. Januar 2007 (2007-01-01), XP055658325, Gefunden im Internet: URL:http://ww1.microchip.com/downloads/en/appnotes/01083a.pdf [gefunden am 2020-01-15]

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Bestimmen einer Rotorstellung eines BLDC-Motors. Die Erfindung betrifft ferner ein Verfahren zum Anfahren eines BLDC-Motors. Die Erfindung betrifft zusätzlich einen Motor mit einer Vorrichtung, die eingerichtet ist, das Verfahren zum Bestimmen einer Rotorstellung eines BLDC-Motors auszuführen.

Stand der Technik

BLDC-Motoren (englisch: Brushless Direct Current Motors - deutsch: Bürstenlose Gleichstrommotoren) haben gegenüber Gleichstrommotoren mit Kommutator die Vorteile einer kompakteren Bauweise, eines kontinuierlicheren Betriebs und einer erhöhten Lebensdauer. Da ein BLDC-Motor keinen Kommutator aufweist, muss für den Betrieb eines BLDC-Motors eine Kommutierung aktiv auf eine Stellung des Rotors in Bezug auf den Stator des BLDC-Motors abgestimmt werden. Zur Bestimmung der Rotorstellung sind im Stand der Technik verschiedene Lösungen bekannt.

Beispielsweise beschreibt die US 9 190 940 B2 ein System zur Geschwindigkeitsregelung eines bürstenlosen Motors, bei dem eine Rotorstellung des Motors mittels eines HallSensors bestimmt wird.

Ferner sind Verfahren zum sensorlosen Ansteuern von Motoren und zum sensorlosen Bestimmen von Rotorstellungen in Motoren beispielsweise aus der US 8 159 162 B2 bekannt. Die US 8 159 162 B32 beschreibt ein Verfahren zum Anfahren eines BLDC-Motors, bei dem auf eine Phase, in der der Motor mit einer aufgezwungenen Kommutierung beschleunigt wird, eine Phase folgt, in der die Spulen hochohmig geschaltet werden, worauf wiederum eine Phase folgt, in der eine sensorlose Steuerung des Motors stattfindet.

Aus der EP 2 596 577 B1 und der US 8 093 847 B2 sind Verfahren zum Ansteuern mehrphasiger kommutierter elektrischer Maschinen bekannt, in denen eine Rotorstellung durch einen Nulldurchgang der in einer der Spulen der kommutierten Maschine induzierten Spannung ermittelt wird.

Aus der Druckschrift EP 2 037 567 A2 ist ein Verfahren zum Steuern eines BLDC Motors bekannt. Aus der Druckschrift DE 10 2014 001 184 A1 ist ein Verfahren zum Betreiben eines Elektromotors bekannt. Aus der Druckschrift US 2012/049777 A1 ist eine natürliche Kommutierung für dreiphasige BLDC Motoren bekannt.

Im bekannten Stand der Technik ist zur Bestimmung der Rotorstellung notwendig, wenigstens eine der Erregerspulen für einen substantiellen Zeitraum leistungslos zu betreiben. Dies hat jedoch Leistungseinbußen im Motorbetrieb zur Folge. Darüber hinaus ist im Stand der Technik pro Rotorumdrehung lediglich eine begrenzte Anzahl von Bestimmungen der Rotorstellung durchführbar. Dies kann wiederum dazu führen, dass die Bestimmung der Rotorstellung eine nicht ausreichende Genauigkeit aufweist oder einen langen Zeitraum benötigt.

Offenbarung der Erfindung

Die der Erfindung zugrundeliegende Aufgabe kann darin gesehen werden, ein effizientes Verfahren zum Bestimmen einer Rotorstellung zu einer Erregerspule in einem BLDC-Motor und ein effizientes Verfahren zum Anfahren eines BLDC-Motors bereitzustellen.

Die Aufgabe wird mittels des jeweiligen Gegenstands der unabhängigen Ansprüche gelöst. Vorteilhafte Ausgestaltungen der Erfindung sind Gegenstand der jeweils abhängigen Ansprüche.

Nach einem ersten Aspekt offenbart die Erfindung ein Verfahren zum Bestimmen einer Rotorstellung eines BLDC-Motors mit einem magnetischen Rotor und einem Stator mit zumindest einer Erregerspule an der eine Erregerspannung gemäß einer Kommutierung angelegt ist, die Verfahrensschritte umfassend: Unterbrechen der an der zumindest einen Erregerspule anliegenden Erregerspannung, wobei die Erregerspannung einen Verlauf mit wenigstens einem Abschnitt aufweist, in dem der Verlauf der Erregerspannung eine nichtverschwindende endliche Steigung aufweist, und wobei die Erregerspannung in dem Abschnitt unterbrochen wird, Aufnehmen einer in der zumindest einen Erregerspule induzierten Spannung, Wiederherstellen der Erregerspannung, und Bestimmen einer Rotorstellung des Rotors zur zumindest einen Erregerspule anhand der aufgenommenen induzierten Spannung. Sofern im Folgenden von einer Erregerspule gesprochen wird, bezieht sich dies sowohl auf eine einzelne Erregerspule als auch auf eine Mehrzahl an Erregerspulen.

Hiermit kann eine Bestimmung der Rotorstellung mittels einer Messung der in einer Erregerspule des BLDC-Motors induzierten Spannung erzielt werden, und zwar, ohne hierbei den BLDC-Motor für einen längeren Zeitraum leistungsfrei betreiben zu müssen. Da die Unterbrechung der Erregerspannung einer Erregerspule auf die Zeitdauer reduziert werden kann, die mindestens zur Messung der in der jeweiligen Erregerspule induzierten Spannung benötigt wird, kann eine Bestimmung der Rotorstellung durchgeführt werden, ohne den Beschleunigungsprozess des BLDC-Motors durch das Verfahren zum Bestimmen einer Rotorstellung zu beeinträchtigen. Die Bestimmung der Rotorstellung und die Beschleunigung des BLDC-Motors können somit simultan erfolgen. Folglich ist eine sanftere Anfahrphase des BLDC-Motors ermöglicht und Leistungseinbußen können vermieden werden.

Die Bestimmung einer Rotorstellung ist nicht auf die Bestimmung eines Nulldurchgangs der induzierten Spannung beschränkt, da die Erregerspannung an beliebigen Stellen im Spannungsverlauf unterbrochen werden kann. Durch die Bestimmung der in der jeweiligen Erregerspule induzierten Spannung und durch einen Vergleich der gemessenen induzierten Spannung mit einem zu erwartenden Wert für die induzierte Spannung ist eine eindeutige Bestimmung der Rotorstellung anhand der aufgenommenen in der jeweiligen Erregerspule induzierten Spannung ermöglicht.

Somit kann ferner eine höhere Flexibilität in der Aufnahme von Messwerten für die in der Erregerspule induzierte Spannung erreicht werden. Dadurch, dass an beliebigen Stellen im Spannungsverlauf die Erregerspannung unterbrochen werden kann und Messwerte für die induzierte Spannung aufgenommen werden können, kann pro Rotorumlauf eine prinzipiell beliebige Anzahl von Messwerten für die induzierte Spannung aufgenommen werden. Hierdurch können die Präzision der Bestimmung der Rotorstellung erhöht und die Dauer einer Bestimmung der Rotorstellung verkürzt werden. Insbesondere kann somit der Abstand zwischen zwei Bestimmungsvorgängen der Rotorstellung verkürzt werden, wodurch wiederum eine höhere Bandbreite erzielt werden kann.

Durch die Unterbrechung der Erregerspannung zu einem Zeitpunkt, zu dem der Verlauf der Erregerspannung eine nichtverschwindende endliche Steigung aufweist, kann ein gemessener Spannungswert der induzierten Spannung eindeutig einem Spannungswert der Erregerspannung zugeordnet werden. Dies lässt einen eindeutigen Vergleich der in der Erregerspule induzierten Spannung und der an der Erregerspule anliegenden Erregerspannung zu. Über den Vergleich der induzierten Spannung mit der an der Erregerspule anliegenden Spannung ist eine Bestimmung der Rotorstellung ermöglicht, indem eine Abweichung der induzierten Spannung von der angelegten Erregerspannung ein Maß für die Abweichung einer tatsächlichen Rotorstellung von einer Rotorstellung darstellt, für die Rotorstellung und Kommutierung optimal aufeinander abgestimmt sind.

Unter einer Erregerspule wird im Folgenden eine stromführende Wicklung verstanden, die unter elektrischer Last geeignet ist, ein Magnetfeld zu induzieren, mittels dem der magnetische Rotor beschleunigt werden kann. Eine Erregerspannung ist in diesem Zusammenhang eine an der Erregerspule zur Erzeugung des magnetischen Felds anliegende Spannung.

Unter induzierter Spannung wird im Folgenden eine in der Erregerspule durch eine Relativbewegung des magnetischen Rotors zur Erregerspule und eine damit verbundene Änderung des durch die Erregerspule hindurchtretenden magnetischen Flusses des magnetischen Rotors hervorgerufene Spannung verstanden. Die induzierte Spannung steht in Relation zu einer Rück-Elektromotorischen Kraft (BACK-EMF).

Mit dem Unterbrechen der Erregerspannung der Erregerspule wird im Folgenden das Schalten der Erregerspule aus einem aktiven Zustand in einen hochohmigen Zustand verstanden. Nach Unterbrechung der Erregerspannung ist der Stromfluss in der Erregerspule unterbrochen, sodass für die Dauer der Unterbrechung der Erregerspannung die Erregerspule kein magnetisches Feld erzeugt. Das Unterbrechen im vorliegenden Sinne erfolgt in den Phasen der Kommutierung, in denen die Erregerspannung einen von Null verschiedenen Wert aufweist. Phasen, in denen aufgrund der Kommutierung die Erregerspulen hochohmig sind, entsprechen nicht einem Unterbrechen im vorliegenden Sinne.

Unter einem Verlauf mit einer nichtverschwindenden endlichen Steigung ist eine Spannungs-Zeit-Kurve zu verstehen, deren Steigung weder den Wert 0 (Null) noch den Wert ∞ (Unendlich) annimmt.

Unter einer Rotorstellung ist im Folgenden eine Orientierung des magnetischen Rotors relativ zu der Erregerspule des Stators zu einem bestimmten Zeitpunkt zu verstehen. In einer bestimmten Rotorstellung weist der Rotor zu einem Zeitpunkt einen eindeutigen Winkel zur Erregerspule, beispielsweise zur Längsachse der Erregerspule, auf. Eine bestimmte Rotorstellung zur Erregerspule zu einem bestimmten Zeitpunkt schließt eine Bewegung des Rotors relativ zur Erregerspule zu anderen Zeiten nicht aus. So weist ebenfalls ein gleichmäßig rotierender Rotor eine eindeutige Rotorstellung zur Erregerspule auf.

Nach einer Ausführungsform wird die Erregerspannung für eine Mehrzahl von ersten Zeitpunkten unterbrochen und für eine Mehrzahl von zweiten Zeitpunkten wiederhergestellt, wobei für jede Unterbrechung der Erregerspannung zwischen den ersten Zeitpunkten und den zweiten Zeitpunkten die induzierte Spannung aufgenommen wird, und wobei für jede aufgenommene induzierte Spannung eine Rotorstellung bestimmt wird.

Pro Rotorumdrehung kann eine Vielzahl von Messwerten für die induzierte Spannung aufgenommen werden. Durch die erhöhte Anzahl an aufgenommenen Messwerten kann die Genauigkeit der Bestimmung der Rotorstellung erhöht werden. Somit kann eine Bestimmung einer Rotorstellung beschleunigt werden, sodass lediglich eine geringe Anzahl von Rotorumdrehungen zur Bestimmung der Rotorstellung benötigt werden. Ferner können Fehlmessungen und fehlerhafte Bestimmungen der Rotorstellung und damit verbundene fehlerhafte Anpassungen der Kommutierung verringert werden.

Der erste Zeitpunkt ist hierbei als der Zeitpunkt zu verstehen, zu dem die Unterbrechung der Erregerspannung eingeleitet wird. Die tatsächliche Unterbrechung der Erregerspannung, die dadurch gekennzeichnet ist, dass die jeweilige Erregerspule hochohmig ist, tritt folglich erst zu einem späteren Zeitpunkt als der erste Zeitpunkt ein. Zum ersten Zeitpunkt weist die Erregerspannung hingegen ein Spannungspotential gemäß der Kommutierung auf.

Der zweite Zeitpunkt beschreibt hingegen den Zeitpunkt, zu dem die Erregerspannung nach abgeschlossener Unterbrechung wieder einen Spannungswert gemäß der Kommutierung aufweist.

Die ersten und zweiten Zeitpunkte markieren somit den Zeitraum der Unterbrechung sind jedoch selbst nicht in dem Zeitraum der Unterbrechung angeordnet. Zu den ersten und zweiten Zeitpunkten weist die Erregerspannung somit Spannungswerte auf, die diese gemäß der Kommutierung auch ohne Unterbrechung aufweisen würde.

Nach einer Ausführungsform weist der Stator des BLDC-Motors eine Mehrzahl von Erregerspulen auf, an denen jeweils eine Erregerspannung anliegt, wobei für jede der Erregerspulen die Erregerspannung zeitlich nacheinander unterbrochen und während der Unterbrechung eine in der jeweiligen Erregerspule induzierte Spannung aufgenommen wird, und wobei für jede aufgenommene induzierte Spannung eine Rotorstellung bestimmt wird.

Durch die Bestimmung der Rotorstellung für eine Mehrzahl von Erregerspulen kann die Anzahl der Bestimmungen der Rotorstellungen pro Rotorumlauf weiter erhöht werden. Somit können wiederum die Bestimmung der Rotorstellung und die damit verbundene Anpassung der Kommutierung beschleunigt werden. Ferner können Fehlmessungen und fehlerhafte Bestimmungen der Rotorstellung verringert werden.

Nach einer Ausführungsform umfasst der Verfahrensschritt Bestimmen einer Rotorstellung die Verfahrensschritte: Vergleichen der zu einem Messzeitpunkt aufgenommenen induzierten Spannung mit einer für den Messzeitpunkt und für eine Rotorstellung, auf die die Kommutierung optimal abgestimmt ist, zu erwartenden induzierten Spannung, Bilden einer Differenz zwischen der induzierten Spannung und der zu erwartenden induzierten Spannung, und Bestimmen eines Kommutierungsfehlers, wobei der Kommutierungsfehler einer Zeitdifferenz zwischen dem Messzeitpunkt und einem dritten Zeitpunkt entspricht, und wobei für den dritten Zeitpunkt die zu erwartende induzierte Spannung gleich der induzierten Spannung zum Messzeitpunkt ist, und Ableiten der Rotorstellung aus der gebildeten Differenz und dem Kommutierungsfehler.

Die Rotorstellung kann hierdurch in Abhängigkeit zu einer fiktiven Rotorstellung bestimmt werden, auf die eine gegebene Kommutierung optimal abgestimmte wäre. Mittels dem Kommutierungsfehler kann ein Wert für eine zeitliche Abweichung zwischen der tatsächlichen Rotorstellung und der fiktiven Rotorstellung, auf die die gegebene Kommutierung optimal abgestimmt wäre, bestimmt werden. Die fiktive Rotorstellung dient hierbei als Vertreter der tatsächlichen Kommutierung und stellt für die gegebene Kommutierung die gewünschte Rotorstellung dar, für die Kommutierung und Rotorstellung optimal aufeinander abgestimmt sind. Auf diese Weise kann die tatsächliche Rotorstellung in Relation zu einer gewünschten Rotorstellung bestimmt werden. Da die fiktive Rotorstellung in direkter Relation zur tatsächlichen Kommutierung steht, kann Anhand des Kommutierungsfehlers somit die tatsächliche Rotorstellung relativ zur Kommutierung bestimmt werden.

Unter der zu erwartenden induzierten Spannung ist im Folgenden die Spannung zu verstehen, die bei einer gegebenen Kommutierung die Rotorstellung in einer Erregerspule induziert, auf die die gegebene Kommutierung optimal angepasst ist. Unter einer optimalen Anpassung zwischen Kommutierung und Rotorstellung ist im Folgenden zu verstehen, dass bei optimal angepasster Kommutierung die entsprechende Rotorstellung bei gegebener Leistung des BLDC-Motors eine maximale Drehzahl ermöglicht.

Nach einer Ausführungsform wird die zu erwartende induzierte Spannung aus der Erregerspannung bestimmt.

Durch eine Messung der Erregerspannung kann eine einfache Bestimmung der zu erwartenden induzierten Spannung realisiert werden.

Nach einer Ausführungsform wird zur Bestimmung der zu erwartenden induzierten Spannung zum Messzeitpunkt die Erregerspannung zum ersten Zeitpunkt und zum zweiten Zeitpunkt bestimmt, wobei die zu erwartende induzierte Spannung zum Messzeitpunkt gleich der halben Summe der Erregerspannung zum ersten Zeitpunkt und der Erregerspannung zum zweiten Zeitpunkt ist.

Hierdurch ist eine möglichst einfache Bestimmung der zu erwartenden induzierten Spannung ermöglicht.

Nach einer Ausführungsform wird der zu erwartende Spannungswert für die induzierte Spannung aus einer Datenbank ausgelesen.

Hierdurch wird eine einfache Bestimmung eines zu erwartenden Spannungswerts für die induzierte Spannung erreicht.

Nach einer Ausführungsform weist die in der zumindest einen Erregerspule induzierte Spannung ein trapezförmiges oder sinusförmiges Profil auf.

Das Profil der in der Erregerspule induzierten Spannung ist mit dem Profil der Erregerspannung abgestimmt. Somit kann die Bestimmung der Rotorstellung anhand der in der Erregerspule induzierten Spannung vereinfacht werden.

Eine Sinus-Kommutierung fällt nicht unter den Schutzumfang der Erfindung.

Hierdurch wird eine möglichst gleichmäßige Startphase des BLDC-Motors erreicht, in der der Motor mit einer aufgezwungenen Kommutierung und ohne Kenntnis der Rotorstellung betrieben wird.

Nach einem zweiten Aspekt wird ein Verfahren zum sensorlosen Anfahren eines BLDC-Motors bereitgestellt, umfassend: eine Startphase, wobei in der Startphase der BLDC-Motor mit einer vorbestimmten aufgezwungenen Kommutierung angefahren und der Rotor auf eine Rotorgeschwindigkeit beschleunigt wird, die ein Aufnehmen einer durch den rotierenden Rotor in der zumindest einen Erregerspule induzierten Spannung ermöglicht, eine Messphase, wobei in der Messphase bei Erreichen der Rotorgeschwindigkeit die Verfahrensschritte des Verfahrens zum Bestimmen einer Rotorstellung ausgeführt werden, und wobei nach jeder Bestimmung einer Rotorstellung nach dem Verfahren zur Bestimmung einer Rotorstellung eine Anpassung der Kommutierung an die bestimmte Rotorstellung durchgeführt wird, und eine Betriebsphase, wobei in der Betriebsphase bei Erreichen eines Überführungszeitpunkts zur weiteren Beschleunigung und zum Betrieb des BLDC-Motors die Kommutierung in eine Blockkommutierung überführt wird.

Hierdurch wird ein effizientes Verfahren zum sensorlosen Anfahren eines BLDC-Motors erreicht. Insbesondere wird der technische Vorteil erreicht, dass über das Anfahren mit einer erzwungenen Kommutierung mit einem Trapezprofil trotz Unkenntnis über die Rotorstellung ein störungsfreies Anfahren des BLDC-Motors erreicht wird, dass im Vergleich zum Anfahren mit einer aufgezwungenen Blockkommutierung eine geringe Störung durch ein Einrasten des Rotors aufweist. Ferner wird der Vorteil erreicht, dass durch die Messphase eine Bestimmung der Rotorstellung und ein Anpassen der Kommutierung an die Rotorstellung erfolgen kann, ohne dass hierzu der BLDC-Motor leistungslos geschaltet werden muss. Stattdessen ist in der Messphase eine weitere Beschleunigung des BLDC-Motors möglich, sodass Leistungseinbußen des BLDC-Motors innerhalb der Messphase vermieden werden können.

Darüber hinaus kann eine Anpassung der Kommutierung an eine bestimmte Rotorstellung für eine Mehrzahl von zu verschiedenen Zeitpunkten bestimmten Rotorstellungen innerhalb einer Rotorumdrehung durchgeführt werden. Somit kann aufgrund der hohen Anzahl von Anpassungen der Kommutierung an eine Mehrzahl von Rotorstellungen innerhalb einer Rotorumdrehung die Präzision der Anpassung der Kommutierung an die Rotorstellung erhöht werden. Ferner kann eine Anpassung in einer geringeren Anzahl von Rotorumdrehungen erreicht werden. Darüber hinaus kann in der Betriebsphase nach Überführung der Kommutierung in die Blockkommutierung ein optimaler Betrieb gewährleistet werden.

Nach einer Ausführungsform umfasst die Betriebsphase die Verfahrensschritte: Aufnehmen der in der zumindest einen Erregerspule induzierten Spannung, Bestimmen einer Rotorstellung zur zumindest einen Erregerspule anhand der aufgenommenen induzierten Spannung, und Anpassen der Kommutierung an die bestimmte Rotorstellung.

Hierdurch wird erreicht, dass auch bei vollem Betrieb des BLDC-Motors eine Überprüfung und eine Anpassung der Kommutierung durchgeführt werden kann.

Nach einer Ausführungsform des Verfahrens zum Anfahren eines BLDC-Motors ist der Überführungszeitpunkt durch Erreichen einer vorbestimmten Drehzahl des BLDC-Motors und/oder durch Erreichen eines vorbestimmten Grenzwerts des Kommutierungsfehlers bestimmt.

Ein Überführen des BLDC-Motors von der Kommutierung in die Blockkommutierung kann für einen Zeitpunkt durchgeführt werden, zu dem die Kommutierung des BLDC-Motors bereits an die Rotorstellung angepasst ist und so ein gleichmäßiger Betrieb des BLDC-Motors in Blockkommutierung gewährleistet werden kann.

Der Überführungszeitpunkt kann hierbei an das Erreichen eines minimalen Kommutierungsfehlers gekoppelt sein, sodass ein Grenzwert für eine Güte der Kommutierung mit einem vorbestimmten Mindestwert für den Kommutierungsfehler gesetzt werden kann, vor dessen Erreichen eine Überführung nicht stattfindet.

Ebenfalls kann der Überführungszeitpunkt an eine Mindestdrehzahl gebunden sein, was aufgrund der einfachen Messbarkeit der Drehzahl vorteilhaft sein kann. Hierbei wird vorausgesetzt, dass bei Erreichen einer bestimmten Drehzahl, die Anpassung der Kommutierung bereits derart fortgeschritten ist, dass ein Betrieb des BLDC-Motors in Blockkommutierung problemlos möglich ist.

Nach einer Ausführungsform des Verfahrens zum Anfahren eines BLDC-Motors umfasst die Anpassung der Kommutierung das Minimieren des Kommutierungsfehlers.

Hierdurch wird erreicht, dass die Anpassung der Kommutierung mit einem einfach zu bestimmenden Zahlenwert verbunden wird. Dies trägt zur Vereinfachung des Verfahrens bei.

Der Kommutierungsfehler entspricht einer zeitlichen Abweichung zwischen der tatsächlichen Rotorstellung und einer fiktiven Rotorstellung, für die Rotorstellung und Kommutierung optimal aufeinander abgestimmt sind. Bei einer Anpassung der Kommutierung, die eine Minimierung des Kommutierungsfehlers umfasst, wird somit die Kommutierung derart verändert, dass die fiktive Rotorstellung der geänderten Kommutierung mit der tatsächlichen Rotorstellung zusammenfällt.

Nach einem dritten Aspekt wird ein BLDC-Motor mit einer Steuerungseinrichtung bereitgestellt, die eingerichtet ist, ein Verfahren zum Bestimmen einer Rotorstellung und/oder ein Verfahren zum Anfahren eines BLDC-Motors auszuführen.

Hierdurch wird ein BLDC-Motor bereitgestellt, der mit einem effizienten Verfahren zu Bestimmung einer Rotorstellung und/oder mit einem effizienten Verfahren zum Anfahren betrieben werden kann.

Die Erfindung wird im Folgenden anhand von bevorzugten Ausführungsformen näher erläutert. Hierbei zeigen:

Fig. 1 eine schematische Ansicht eines BLDC-Motors nach einer Ausführungsform;

Fig. 2 ein Ablaufdiagramm eines Verfahrens zum Bestimmen einer Rotorstellung gemäß einer ersten Ausführungsform;

Fig. 3 ein Spannungs-Zeit-Diagramm eines Spannungsverlaufs einer Erregerspannung nach dem Verfahren zum Bestimmen einer Rotorstellung gemäß einer Ausführungsform;

Fig. 4 ein Spannungs-Zeit-Diagramm des Spannungsverlaufs der Erregerspannung und eines Spannungsverlaufs einer induzierten Spannung nach dem Verfahren zum Bestimmen einer Rotorstellung gemäß einer Ausführungsform;

Fig. 5 ein Ablaufdiagramm des Verfahrens zum Bestimmen einer Rotorstellung gemäß einer weiteren Ausführungsform;

Fig. 6 ein Spannungs-Zeit-Diagramm des Spannungsverlaufs der induzierten Spannung und eines Spannungsverlaufs einer zu erwartenden induzierten Spannung nach dem Verfahren zum Bestimmen einer Rotorstellung gemäß einer Ausführungsform;

Fig. 7 ein Ablaufdiagramm eines Verfahrens zum Anfahren eines BLDC-Motors gemäß einer Ausführungsform;

Fig. 8 ein Ablaufdiagramm des Verfahrens zum Anfahren eines BLDC-Motors gemäß einer weiteren Ausführungsform;

Fig. 9 ein schematisches Blockschaltbild einer Steuereinrichtung des BLDC-Motors gemäß einer Ausführungsform; und

Fig. 10 ein Spannungs-Zeit-Diagramm des Spannungsverlaufs der Erregerspannung nach einem Verfahren zum Anfahren eines BLDC-Motors gemäß einer Ausführungsform.

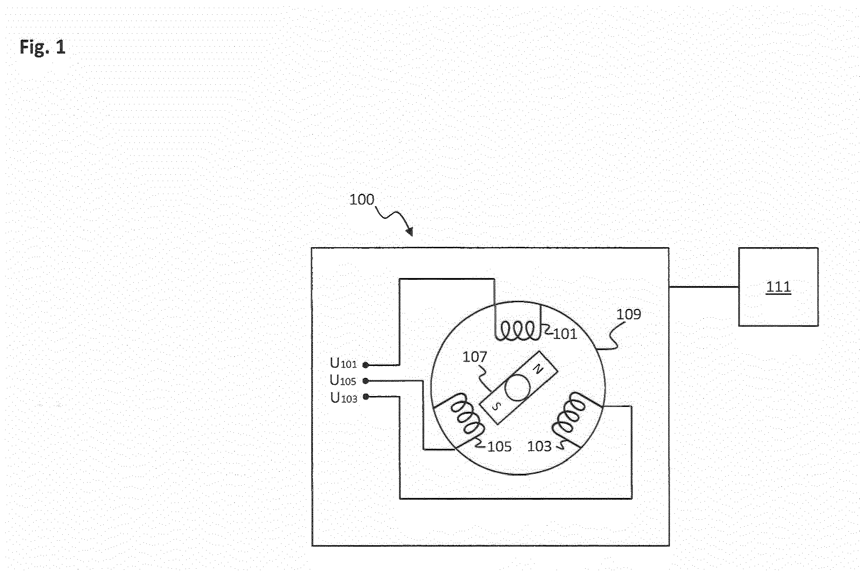

Fig. 1 zeigt eine schematische Ansicht eines BLDC-Motors 100 mit einem Stator 109, einem rotierbar zum Stator 109 ausgebildeten Rotor 107 und einer Steuereinrichtung 111 zur Steuerung des Motors 100.

Der Stator 109 weist vorliegend drei Erregerspulen 101, 103, 105 auf, an denen jeweils eine Erregerspannung $U_{101, 103, 105}$ anliegt. Der Rotor 107 ist als ein magnetischer Rotor ausgebildet, und ist beispielsweise aus einem permanentmagnetischen Material gefertigt.

Der Rotor 107 ist innerhalb des Stators 109 angeordnet und um eine Drehachse relativ zum Stator 109 rotierbar. In radialer Richtung um die Drehachse des Rotors 107 sind am Stator 109 drei Erregerspulen 101, 103, 105 angeordnet. Mittels der an den Erregerspulen 101, 103, 105 anliegenden Erregerspannung $U_{101, 103, 105}$ kann in jeder Erregerspule 101, 103, 105 eine magnetische Erregung erzielt werden und ein magnetisches Feld beziehungsweise eine magnetische Flussdichte erzeugt werden.

Durch die magnetischen Felder der Erregerspulen 101, 103, 105 kann der permanentmagnetische Rotor 107 relativ zum Stator 109 beschleunigt und zu einer Rotationsbewegung angeregt werden. Über eine Kommutierung der Erregerspannung $U_{101, 103, 105}$, der einzelnen Erregerspulen 101, 103, 105, bei der die Polarität der Erregerspannung $U_{101, 103, 105}$ in einer bestimmbaren Taktung alternierend wechselt und damit die magnetischen Felder der Erregerspulen 101, 103, 105 mit einer getakteten alternierenden Polung versehen werden, kann die Rotationsbewegung des Rotors 107 aufrechterhalten werden.

Die Steuereinrichtung 111 ist eingerichtet, den BLDC-Motor 100 zu steuern. Insbesondere ist die Steuereinrichtung 111 eingerichtet, den BLDC-Motor 100 mittels eines Verfahrens zum Anfahren den BLDC-Motor 100 anzufahren und zu betreiben und mittels eines Verfahrens zum Bestimmen einer Rotorstellung eine Rotorstellung des Rotors 107 zu wenigstens einer Erregerspule 101, 103, 105 zu bestimmen.

Die Steuereinrichtung ist ferner ausgebildet, eine Kommutierung an die bestimmte Rotorstellung anzupassen.

Die Steuereinrichtung 111 kann in den BLDC-Motor 100 integriert sein oder als eine externer Steuereinrichtung 111 ausgebildet sein.

Abweichend von der in Fig. 1 dargestellten Ausführungsform sind auch anderen Konfigurationen des BLDC-Motors 100 denkbar. Beispielsweise kann die Anzahl der Erregerspulen 101, 103, 105 erhöht oder verringert sein. Auch können die Erregerspulen 101, 103, 105 am Rotor 107 ausgebildet und der Stator 109 permanentmagnetisch ausgebildet sein. Auch kann der Stator 109 innerhalb des Rotors 107 ausgebildet sein und sich der Rotor 107 um den Stator 109 drehen. Weitere Varianten sind ebenfalls denkbar. Insbesondere kann der BLDC-Motor auch ein Linearmotor sein.

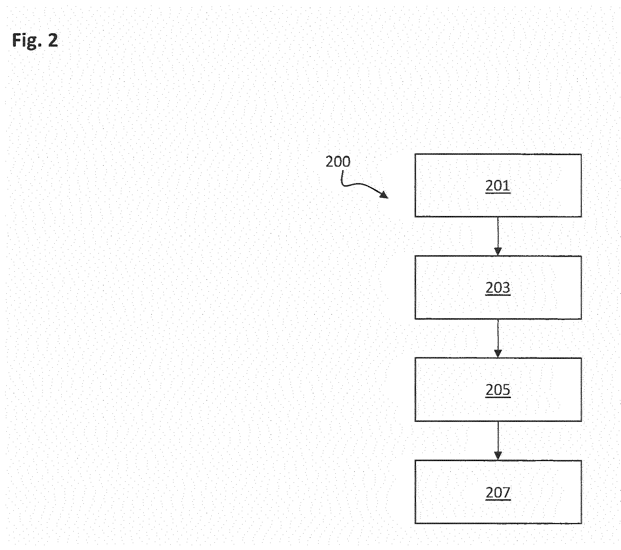

Fig. 2 zeigt ein Ablaufdiagramm eines Verfahrens 200 zum Bestimmen einer Rotorstellung eines BLDC-Motors gemäß einer ersten Ausführungsform, wobei vorzugsweise der BLDC-Motor 100 einen Aufbau gemäß der zu Fig. 1 beschrieben Ausführungsform aufweist. Beispielhaft wird das Verfahren anhand von der ersten Erregerspule 101 beschrieben, an der eine zugehörige erste Erregerspannung $U_{101}$ gemäß einer Kommutierung K1 angelegt ist. Die Beschreibung ist analog übertragbar auf die zweite Erregerspule 103 und/oder dritte Erregerspule 105 gemäß des Ausführungsform gemäß Fig. 1 und/oder gegebenenfalls weiterer Erregerspulen gemäß nicht dargestellter Ausführungsformen des BLDC-Motors 100. Das Verfahren 200 zum Bestimmen einer Rotorstellung kann ausschließlich mittels der ersten Erregerspule 101 durchgeführt werden. Alternativ ist denkbar, dass das Verfahren 200 zum Bestimmen der Rotorlage zusätzlich auch mittels weiterer Erregerspulen 103, 105 durchgeführt wird, wobei die Verfahrensschritte in Bezug auf die einzelnen Erregerspulen 101, 103, 105 zu unterschiedlichen Zeitpunkten beginnen, wie im Folgenden noch näher erläutert wird.

Gemäß Fig. 2 umfasst das Verfahren 200 zum Bestimmen einer Rotorstellung eines BLDC-Motors 100 die folgenden Verfahrensschritte: Unterbrechen 201 der an der ersten Erregerspule 101 anliegenden ersten Erregerspannung $U_{101}$, Aufnehmen 203 einer in der ersten Erregerspule 101 induzierten Spannung $U_{IND}$, Wiederherstellen 205 der ersten Erregerspannung $U_{101}$, und Bestimmen 207 einer Rotorstellung des Rotors 107 zur ersten Erregerspule 101 anhand der aufgenommenen induzierten Spannung $U_{IND}$.

Nach der Ausführungsform in Fig. 2 findet das Verfahren 200 zur Bestimmung einer Rotorstellung eines BLDC-Motors 100 Anwendung, nachdem der BLDC-Motor 100 in einer vorangegangenen Startphase bereits beschleunigt wurde. Bei Anwenden des Verfahrens 200 zur Bestimmung einer Rotorstellung ist der Rotor 107 des BLDC-Motors 100 somit vorzugsweise bereits durch das Magnetfeld der Erregerspulen 101, 103, 105 beschleunigt und führt gegenüber den Erregerspulen 101, 103, 105 eine Relativbewegung aus. Ferner kann der Rotor 107 auf eine Geschwindigkeit beschleunigt sein, die ausreichend ist, in der ersten Erregerspule 101 eine messbare Spannung $U_{IND}$ zu induzieren.

Zur Beschleunigung des Rotors 107 gegenüber den Erregerspulen 101, 103, 105 ist die an den Erregerspulen 101, 103, 105 anliegende Erregerspannung $U_{101, 103, 105}$ mit einer Kommutierung K1 beaufschlagt. Die Kommutierung K1 kann dabei derart ausgestaltet sein, dass das Magnetfeld der Erregerspulen 101, 103, 105 wenigstens bezüglich einer Feldrichtung derart alterniert, dass der Rotor 107 über das alternierende Magnetfeld in eine Rotationsbewegung relativ zu den Erregerspulen 101, 103, 105 versetzt werden kann.

In einem ersten Verfahrensschritt 201 wird eine an der ersten Erregerspule 101 des BLDC-Motors 100 anliegende erste Erregerspannung $U_{101}$ unterbrochen. Dabei wird die erste Erregerspule 101 in einen hochohmigen Zustand versetzt, sodass ein Erregerstrom in der ersten Erregerspule 101 zum Erliegen kommt.

Bei Unterbrechung der ersten Erregerspannung $U_{101}$ wird die erste Erregerspule 101 in einen hochohmigen Zustand überführt, in dem keine Erregerspannung $U_{101}$ an der ersten Erregerspule 101 anliegt.

Dieses Überführen der ersten Erregerspule 101 in einen hochohmigen Zustand ermöglicht die Messung der in der ersten Erregerspule 101 durch die relative Bewegung des magnetischen Rotors 107 zur ersten Erregerspule 101 und die damit verbundene zeitliche Änderung des durch den magnetischen Rotor 107 erzeugten magnetischen Flusses durch die erste Erregerspule 101 induzierten Spannung $U_{IND}$.

In einem zweiten Verfahrensschritt 203 wird eine in der ersten Erregerspule 101, deren erste Erregerspannung $U_{101}$ im ersten Verfahrensschritt 201 unterbrochen worden ist, durch die Bewegung des Rotors 107 zur ersten Erregerspule 101 induzierte Spannung $U_{IND}$ aufgenommen. Pro Unterbrechung der ersten Erregerspannung $U_{101}$ kann ein Spannungswert $U_{IND}(t_{EMF})$ der induzierten Spannung $U_{IND}$ für einen Messzeitpunkt $T_{EMF}$ während der Unterbrechung aufgenommen werden.

Die Unterbrechung der ersten Erregerspannung $U_{101}$ kann ferner auf die Mindestdauer, die zur Aufnahme des Spannungswerts $U_{IND}(t_{EMF})$ benötigt wird, beschränkt werden, um eine Unterbrechungszeit möglichst gering zu halten und eine Leistungseinbuße des BLDC-Motors 100 aufgrund der Unterbrechung der ersten Erregerspannung $U_{101}$ und der damit verbundenen Verringerung der magnetischen Leistung der ersten Erregerspule 101 ebenfalls auf ein Mindestmaß zu reduzieren.

Denkbar wäre jedoch ebenfalls, die Dauer der Unterbrechung variabel zu gestalten, um mehr als einen Spannungswert der induzierten Spannung $U_{IND}$ pro Unterbrechung der ersten Erregerspannung $U_{101}$ aufzunehmen, oder um die Unterbrechung besser an den Verlauf der ersten Erregerspannung $U_{101}$ anzupassen.

In einem folgenden dritten Verfahrensschritt 205 wird die erste Erregerspannung $U_{101}$ derart wiederhergestellt, dass der durch die Kommutierung vorgegebene Verlauf der ersten Erregerspannung $U_{101}$ fortgesetzt wird. Das durch die Kommutierung K1 vorbestimmte Spannungsprofil bleibt neben der Unterbrechung unverändert.

In einem darauffolgenden vierten Verfahrensschritt 207 wird anhand der wenigstens zum Messzeitpunkt $t_{EMF}$ bestimmten induzierten Spannung $U_{IND}$ eine Rotorstellung bestimmt.

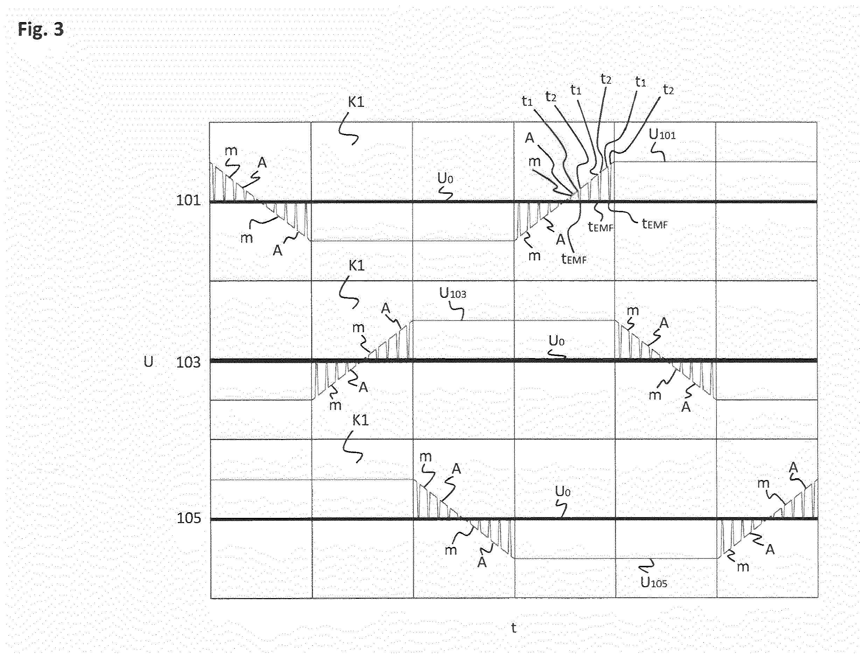

Fig. 3 zeigt ein Spannungs-Zeit-Diagramm eines Spannungsverlaufs einer Erregerspannung $U_{101, 103, 105}$ nach dem Verfahren 200 zum Bestimmen einer Rotorstellung gemäß einer Ausführungsform, wobei die Zeit t auf der X-Achse und die Spannung U auf der Y-Achse aufgetragen ist. Das zuvor beschriebene Verfahren 200 zum Bestimmen einer Rotorstellung wird gemäß Fig. 3 für alle drei Erregerspulen 101, 103 und 105 angewandt.

In Fig. 3 sind die Verläufe der Erregerspannungen $U_{101, 103, 105}$ für die drei Erregerspulen 101, 103 und 105 des zu Fig. 1 beschriebenen BLDC-Motors 100 gezeigt. Die Erregerspannungen $U_{101, 103, 105}$ sind jeweils gemäß der Kommutierung K1 kommutiert. In Fig. 3 ist die Kommutierung K1 als eine Trapez-Kommutierung dargestellt.

Die Kommutierung K1 kann beispielsweise mittels einer Pulsweitenmodulation PWM erzeugt sein und somit durchgehend Werte zwischen 0 Volt und einer positiven Zwischenkreisspannung eines der Erregerspulen 101, 103, 105 vorgeschalteten Schaltkreises annehmen.

In Fig. 3 ist die jeweilige Erregerspannung $U_{101, 103, 105}$ symmetrisch um die Nulllinie $U_0$ angeordnet. Die Nulllinie $U_0$ kennzeichnet den Zustand, in dem die jeweilige Erregerspule 101, 103, 105 hochohmig ist und an dieser keine Erregerspannung $U_{101, 103, 105}$ anliegt. Der Zeitpunkt $t_{EMF}$, zu dem die Erregerspule 101, 103, 105 hochohmig ist, ist der Zeitpunkt, zu dem die jeweilige Erregerspannung $U_{101, 103, 105}$ der unterbrochenen Erregerspule 101, 103, 105 den Wert der Nulllinie $U_0$ annimmt.

Es wäre jedoch auch denkbar, die jeweilige Erregerspannung $U_{101, 103, 105}$ vom Wert derart zu verschieben, dass die niedrigste Spannung 0 Volt entspricht. Es wäre ebenfalls denkbar, die jeweilige Erregerspannung $U_{101, 103, 105}$ derart zu verschieben, dass der niedrigste Wert einen beliebigen Spannungswert annimmt.

In Fig. 3 ist für die erste Erregerspule 101, die zweite Erregerspule 103 und die dritte Erregerspule 105 jeweils eine Periode der jeweiligen Erregerspannung $U_{101, 103, 105}$ mit Trapez-Kommutierung K1 dargestellt. Jedes Trapez weist jeweils zwei Abschnitte A auf, in denen der Verlauf der Erregerspannung $U_{101, 103, 105}$ eine nichtverschwindende endliche Steigung m aufweist. Vorliegend beschreibt der Abschnitt A die ansteigenden und abfallenden Flanken der Trapeze der Erregerspannungen $U_{101, 103, 105}$ in Trapez-Kommutierung.

In der Ausführungsform der Fig. 3 ist die jeweilige Erregerspannung $U_{101, 103, 105}$ ausschließlich in den Abschnitten A, die die nichtverschwindende endliche Steigung m aufweisen, unterbrochen. Dargestellt sind Unterbrechungen der jeweiligen Erregerspannung $U_{101, 103, 105}$ für jede der drei Erregerspulen 101, 103, 105 in jedem Abschnitt A für eine Mehrzahl von Messzeitpunkten $t_{EMF}$.

In Fig. 3 weist jeder Abschnitt A jeweils fünf Unterbrechungen auf, sodass für jeden Abschnitt A jeweils für fünf unterschiedliche Messzeitpunkte $t_{EMF}$ Spannungswerte der induzierten Spannung $U_{IND}$ aufgenommen werden könnten.

Es könnten aber auch eine höhere oder niedrigere Anzahl von Unterbrechungen und damit von Messzeitpunkten $t_{EMF}$ pro Abschnitt A vorgesehen sein.

Denkbar wäre aber ebenfalls Unterbrechungen der jeweiligen Erregerspannungen $U_{101, 103, 105}$ nur für ausgewählte Erregerspulen 101, 103, 105 und/oder nur bei ausgewählten Abschnitten A vorzunehmen.

Die Abstände zwischen aufeinanderfolgenden Unterbrechungen können variabel gestaltet werden. Speziell können diese an die jeweiligen Ausmaße der Abschnitte A angepasst sein. So können beispielsweise für Abschnitte A mit hoher Steigung m die Unterbrechungen zeitlich näher zueinander angeordnet sein, um beispielsweise gewährleiten zu können, dass in jedem Abschnitt A eine identische Anzahl von Unterbrechungen ausgebildet sind und folglich eine identische Anzahl von Spannungswerten der induzierten Spannung $U_{IND}$ zu den Messzeitpunkten $t_{EMF}$ aufgenommen werden.

Ebenfalls wären aber auch unterschiedliche Anzahlen von Unterbrechungen und Messzeitpunkten $t_{EMF}$ pro Abschnitt A denkbar.

Wie in Fig. 3 dargestellt, beginnt jede Unterbrechung mit einem ersten Zeitpunkt $t_1$, der den Zeitpunkt markiert, zu dem die Unterbrechung der jeweiligen Erregerspannung $U_{101, 103, 105}$ einsetzt. Die Unterbrechung endet, wie dargestellt, mit einem zweiten Zeitpunkt $t_2$, der den Zeitpunkt markiert, zu dem die Unterbrechung beendet und das Spannungspotential gemäß der ersten Kommutierung K1 und dem durch diese vorbestimmten Spannungsverlauf der jeweiligen Erregerspannung $U_{101, 103, 105}$ wieder hergestellt ist.

Ein Messzeitpunkt $t_{EMF}$ ist exakt mittig zwischen den ersten und zweiten Zeitpunkten $t_1$, $t_2$ angeordnet und markiert den Zeitpunkt, zu dem die jeweilige Erregerspannung $U_{101, 103, 105}$ den Wert der Nulllinie $U_0$ annimmt. Die Dauer der Unterbrechung ist damit durch die ersten und zweiten Zeitpunkte $t_1$, $t_2$ der jeweiligen Unterbrechung gegeben und kann beliebig variiert werden.

Ferner kann die Dauer der Unterbrechung an die Steigung m der Abschnitte A angepasst werden, so dass beispielsweise mit einer erhöhten Steigung m für Abschnitte A eine geringere Dauer der Unterbrechung einhergeht.

Es ist jedoch auch denkbar, dass wenigstens zwei der drei Zeitpunkte $t_1$, $t_2$ und $t_{EMF}$ zeitlich zusammenfallen.

In Fig. 3 sind nur drei von fünf der ersten und zweiten Zeitpunkte $t_1$, $t_2$ und die Messzeitpunkte $t_{EMF}$ und auch lediglich für einen Abschnitt A der ersten Erregerspannung $U_{101}$ der ersten Erregerspule 101 mit entsprechenden Bezugszeichen versehen. Dies ist ausschließlich der Übersichtlichkeit der Figur geschuldet. Jede der in den auf- und absteigenden Flanken der Trapeze bzw. den Abschnitten A der Erregerspannungen $U_{101, 103, 105}$ der drei Erregerspulen 101, 103, 105 ausgebildeten Einkerbungen entspricht einem Tripel von erstem Zeitpunkt $t_1$, Messzeitpunkt $t_{EMF}$ und zweitem Zeitpunkt $t_2$.

In Fig. 3 nicht dargestellt ist das Aufnehmen der induzierten Spannung $U_{IND}$ zum Messzeitpunkt $t_{EMF}$ gemäß Verfahrensschritt 203.

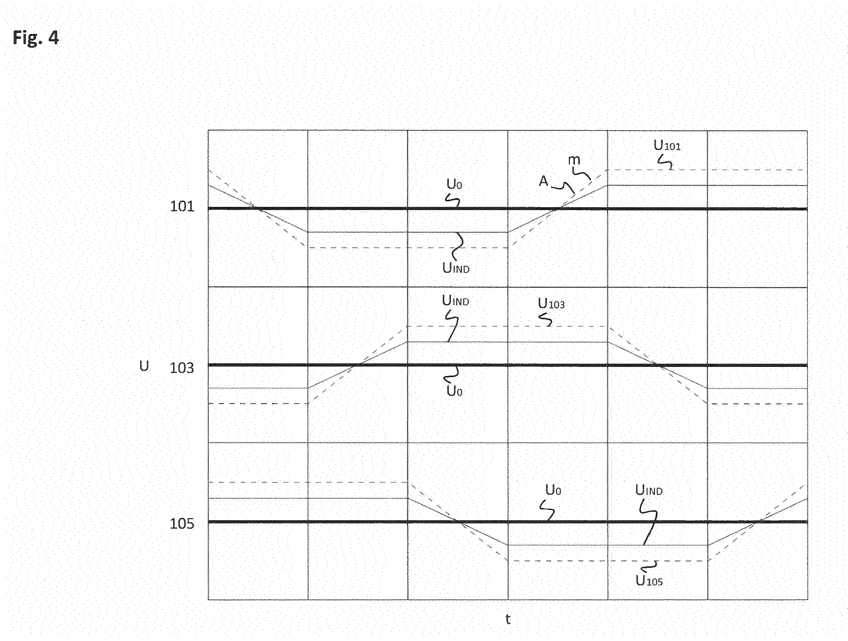

Fig. 4 zeigt ein Spannungs-Zeit-Diagramm des Spannungsverlaufs der Erregerspannungen $U_{101, 103, 105}$ und eines Spannungsverlaufs einer induzierten Spannung $U_{IND}$ nach dem Verfahren 200 zum Bestimmen einer Rotorstellung gemäß der ersten Ausführungsform, wobei die Zeit t auf der X-Achse und die Spannung U auf der Y-Achse aufgetragen ist.

In Fig. 4 sind wiederum Spannungsverläufe der Erregerspannungen $U_{101, 103, 105}$ für die drei Erregerspulen 101, 103 und 105 des BLDC-Motors 100 entsprechend Fig. 1 dargestellt. Ferner ist zu jeder Erregerspule 101, 103, 105 ein Verlauf einer in der jeweiligen Erregerspule 101, 103, 105 durch eine Relativbewegung des magnetischen Rotors 107 zur jeweiligen Erregerspule 101, 103, 105 induzierten Spannung $U_{IND}$ dargestellt. Die Trapeze der jeweiligen induzierten Spannung $U_{IND}$ und die Trapeze der jeweiligen Erregerspannungen $U_{101, 103, 105}$ sind zueinander zentriert angeordnet und die Nulldurchgänge der Erregerspannungen $U_{101, 103, 105}$ und der induzierten Spannungen $U_{IND}$ fallen aufeinander.

Aufgrund von Verlusteffekten, die primär durch den Widerstand der Erregerspulen 101, 103, 105 hervorgerufen werden, erreicht die jeweils induzierte Spannung $U_{IND}$ nicht das Spannungsniveau der Erregerspannungen $U_{101, 103, 105}$. Mittels einer Strommessung und der Kenntnis eines Widerstandswerts einer jeweiligen Erregerspule 101, 103, 105 können die Verlusteffekte korri-

Für einen Rotor 107, der eine Spannung mit einem entsprechenden Profil induziert, und bei einer optimal auf eine Rotorstellung des Rotors 107 abgestimmten Kommutierung K1 und unter Vernachlässigung der genannten Verlusteffekte wäre eine induzierte Spannung $U_{IND}$ zu erwarten, deren Verlauf dem Verlauf der Erregerspannungen $U_{101, 103, 105}$ der jeweiligen Erregerspule 101, 103, 105 entspricht. Im Folgenden wird eine derartige für eine optimale Rotorstellung zu erwartende induzierte Spannung jeweils mit $U_{IND}^{EXP}$ bezeichnet werden. In der vorliegenden Ausführungsform wird ferner eine derartige zu erwartende induzierte Spannung $U_{IND}^{EXP}$ als mit den Erregerspannungen $U_{101, 103, 105}$ identisch angenommen.

In Fig. 4 ist die jeweilige induzierte Spannung $U_{IND}$ ebenfalls mit einem trapezförmigen Verlauf dargestellt. Der Verlauf der induzierten Spannung $U_{IND}$ ist primär durch die strukturelle Ausgestaltung des magnetischen Rotors 107 bestimmt. Eine Anpassung des Verlaufs der Erregerspannungen $U_{101, 103, 105}$ an den Verlauf der induzierten Spannung $U_{IND}$ ist hierbei vorteilhaft für die Bestimmung der Rotorstellung anhand der aufgenommenen induzierten Spannung $U_{IND}$, indem zur Bestimmung der Rotorstellung jeweils ein Vergleich zwischen der aufgenommenen induzierten Spannung $U_{IND}$ und einer zu erwartenden induzierten Spannung $U_{IND}^{EXP}$, die zur jeweiligen Erregerspannung $U_{101, 103, 105}$ in Relation gesetzt werden kann, vorgenommen wird.

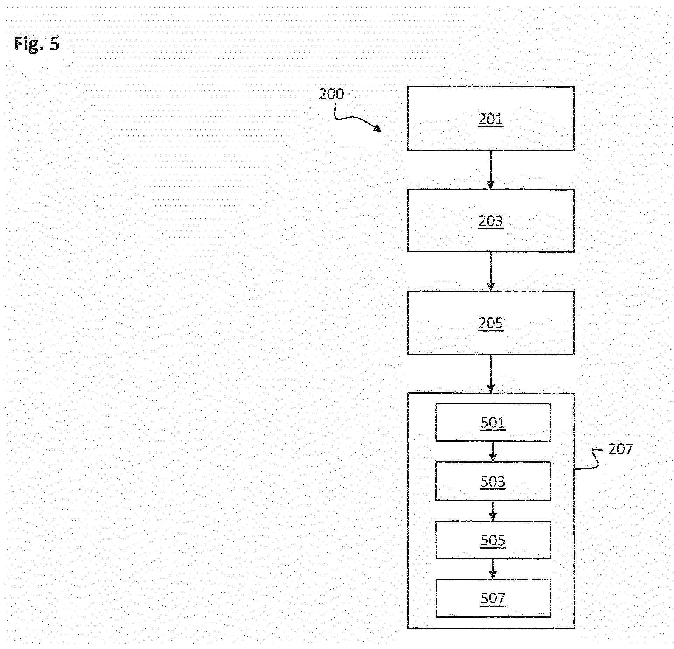

Fig. 5 zeigt ein Ablaufdiagramm des Verfahrens 200 zum Bestimmen einer Rotorstellung gemäß einer weiteren Ausführungsform, wobei die ersten drei Verfahrensschritte 201, 203 und 205 den ersten drei Verfahrensschritten 201, 203 und 205 gemäß der Beschreibung zu Fig. 2 entsprechen. Gemäß der Ausführungsform der Fig. 5 umfasst der vierte Verfahrensschritt 207 die Verfahrensschritte, Vergleichen 501 der zu einem Messzeitpunkt $t_{EMF}$ aufgenommenen induzierten Spannung $U_{IND}$ mit einer für den Messzeitpunkt $t_{EMF}$ und für eine optimal auf die Kommutierung K1 abgestimmte Rotorstellung zu erwartenden induzierten Spannung $U_{IND}^{EXP}$, Bilden 503 einer Differenz $\Delta U$ zwischen der induzierten Spannung $U_{IND}$ und der zu erwartenden induzierten Spannung $U_{IND}^{EXP}$, Bestimmen 505 eines Kommutierungsfehlers $\Delta t$, wobei der Kommutierungsfehler $\Delta t$ einer Zeitdifferenz $t_{EMF}$-$t_3$ zwischen dem Messzeitpunkt $t_{EMF}$ und einem dritten Zeitpunkt $t_3$ entspricht, wobei für den dritten Zeitpunkt $t_3$ die zu erwartende induzierte Spannung $U_{IND}^{EXP}(t_3)$ gleich der induzierten Spannung $U_{IND}(t_{EMF})$ zum Messzeitpunkt $t_{EMF}$ ist: $U_{IND}(t_{EMF})=U_{IND}^{EXP}(t_3)$ , und Ableiten 507 der Rotorstellung aus der Differenz $\Delta U$ und dem Kommutierungsfehler $\Delta t$.

Wie oben bereits dargelegt, entspricht die zu erwartende induzierte Spannung $U_{IND}^{EXP}$ vorliegend einer Spannung, die bei optimaler Abstimmung zwischen Kommutierung und Rotorstellung in einer jeweiligen Erregerspule 101, 103, 105 induziert werden würde.

Die Differenz $\Delta U$ stellt hierbei einen Zahlenwert dar, der eine Abweichung der gemessenen induzierten Spannung $U_{IND}$ von der zu erwartenden induzierten Spannung $U_{IND}^{EXP}$ beschreibt.

Da die gemessene induzierte Spannung $U_{IND}$ von der tatsächlichen Rotorstellung herrührt während die zu erwartende induzierte Spannung $U_{IND}^{EXP}$ eine angestrebte Rotorstellung beschreibt, für die die Kommutierung K1 optimal angepasst wäre, und mittels der für die Kommutierung K1 bei bestimmter Spulenleistung die maximale Drehzahl erreichbar wäre, lässt sich über die Differenz $\Delta U$ eine Abweichung der tatsächlichen Rotorstellung von der gewünschten Rotorstellung bestimmen.

Wie oben bereits dargelegt, werden in der vorliegenden Ausführungsform zur Bestimmung der zu erwartenden induzierten Spannung $U_{IND}^{EXP}$ die Erregerspannungen $U_{101, 103, 105}$ herangezogen. Hierzu weisen die Erregerspannungen $U_{101, 103, 105}$ und die induzierte Spannung $U_{IND}$ ein vergleichbares Profil auf.

Über die zu erwartende induzierte Spannung $U_{IND}^{EXP}$ und die zuvor bestimmte Differenz $\Delta U$ lässt sich ferner ein Kommutierungsfehler $\Delta t$ bestimmen. Der Kommutierungsfehler $\Delta t$ beschreibt eine zeitliche Abweichung, zwischen dem Messzeitpunkt $t_{EMF}$, zu dem ein bestimmter Spannungswert $U_{IND}(t_{EMF})$ für die induzierte Spannung $U_{IND}$ gemessen wurde, und einem dritten Zeitpunkt $t_3$, der dem Zeitpunkt entspricht, zu dem gemäß der zu erwartenden induzierten Spannung $U_{IND}^{EXP}$ der gemessene Spannungswert $U_{IND}(t_{EMF})=U_{IND}^{EXP}(t_3)$ hätte gemessen werden sollen.

Die induzierte Spannung $U_{IND}$ entspricht der tatsächlichen Rotorstellung. Die zu erwartende induzierte Spannung $U_{IND}^{EXP}$ entspricht einer auf die Kommutierung K1 optimal abgestimmte Rotorstellung. Der Kommutierungsfehler $\Delta t$ beschreibt somit den Zeitwert, den die tatsächliche Rotorstellung und die mit der Kommutierung K1 optimal abgestimmte fiktive Rotorstellung voneinander abweichen.

Da die fiktive Rotorstellung in direkter Relation zur Kommutierung K1 steht, ermöglicht der Kommutierungsfehler $\Delta t$ somit die Bestimmung der tatsächlichen Rotorstellung relativ zur Kommutierung K1.

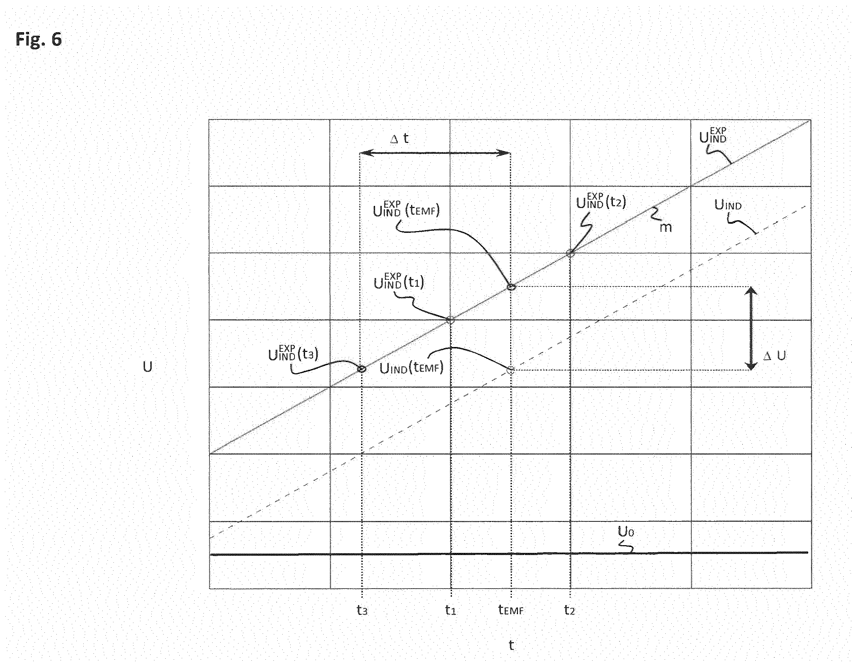

Fig. 6 zeigt ein Spannungs-Zeit-Diagramm des Spannungsverlaufs der induzierten Spannung $U_{IND}$ und einen Spannungsverlauf der zu erwartenden induzierten Spannung $U_{IND}^{EXP}$ nach dem Verfahren 200 zum Bestimmen einer Rotorstellung gemäß der ersten Ausführungsform, wobei die Zeit t auf der X-Achse und die Spannung U auf der Y-Achse aufgetragen ist.

In Fig. 6 sind beispielhaft für die erste Erregerspule 101 die zeitlichen Verläufe sowohl für eine in die erste Erregerspule 101 induzierten Spannung $U_{IND}$ als auch für eine zu erwartende induzierte Spannung $U_{IND}^{EXP}$ jeweils für einen Bereich innerhalb eines Abschnitts A eines Trapezes, vergleichbar mit einem Trapez mit Abschnitt A in Fig. 4, gezeigt. Ferner ist ein Spannungswert der induzierten Spannung $U_{IND}(t_{EMF})$ zum Messzeitpunkt $t_{EMF}$ und zwei Spannungswerte der zu erwartenden induzierten Spannung $U_{IND}^{EXP}(t_1)$ und $U_{IND}^{EXP}(t_2)$ zum ersten Zeitpunkt $t_1$ und zum zweiten Zeitpunkt $t_2$ gezeigt. Der Messzeitpunkt $t_{EMF}$ ist vorliegend exakt mittig zwischen dem ersten Zeitpunkt $t_1$ und dem zweiten Zeitpunkt $t_2$ angeordnet, sodass gilt, $t_{EMF}=(t_1+t_2)/2$.

Wie bereits oben erläutert, kann im vorliegenden Beispiel zur Bestimmung der zu erwartenden induzierten Spannung $U_{IND}^{EXP}$ die erste Erregerspannung $U_{101}$ herangezogen werden. Bei Voraussetzung, dass Erregerspannung und induzierte Spannung ein identisches Profil aufweisen und unter Vernachlässigung von Verlusteffekten entspricht die erste Erregerspannung $U_{101}$ dem Spannungsverlauf der für die in der ersten Erregerspule 101 induzierten Spannung zu erwarten wäre, wenn Kommutierung und Rotorstellung optimal aufeinander abgestimmt wären.

Zur Bestimmung der beiden Spannungswerte $U_{IND}^{EXP}(t_1)$ und $U_{IND}^{EXP}(t_2)$ können folglich nach einer Ausführungsform zu den ersten und zweiten Zeitpunkten $t_1$ und $t_2$ jeweils ein Messwert für die erste Erregerspannung $U_{101}$ aufgenommen werden, mit $U_{101}(t_1)= U_{IND}^{EXP}(t_1)$ und $U_{101}(t_2)= U_{IND}^{EXP}(t_2)$.

Die ersten und zweiten Zeitpunkte $t_1$ und $t_2$ markieren zeitlich die Unterbrechung der ersten Erregerspannung $U_{101}$. Deutlich erkennbar sind die unterschiedlichen Werte, die die erste Erregerspannung $U_{101}$, bzw. die zu erwartende induzierte Spannung $U_{IND}^{EXP}$, zu den ersten und zweiten Zeitpunkten $t_1$ und $t_2$ annimmt. Die Unterbrechung der ersten Erregerspannung $U_{101}$ ist in Fig. 6 nicht dargestellt.

Ferner ist in Fig. 6 ein Spannungswert $U_{IND}^{EXP}(t_{EMF})$ der zu erwartenden induzierten Spannung $U_{IND}^{EXP}$ zum Messzeitpunkt $t_{EMF}$ dargestellt, der den Erwartungswert der induzierten Spannung $U_{IND}$ zum Messzeitpunkt $t_{EMF}$ darstellt. Da zum Messzeitpunkt $t_{EMF}$ die erste Erregerspannung $U_{101}$ zur Messung der induzierten Spannung $U_{IND}$ unterbrochen ist, kann der Spannungswert $U_{IND}^{EXP}(t_{EMF})$ durch eine Messung nicht bestimmt werden. Stattdessen wird der Spannungswert $U_{IND}^{EXP}(t_{EMF})$ aus den bekannten Werten $U_{IND}^{EXP}(t_1)$ und $U_{IND}^{EXP}(t_2)$ gemäß $U_{IND}^{EXP}(t_{EMF})=( U_{IND}^{EXP}(t_2)+ U_{IND}^{EXP}(t_1))/2$ bestimmt.

Mittels des Spannungswerts für die zu erwartende induzierte Spannung $U_{IND}^{EXP}(t_{EMF})$ zum Messzeitpunkt $t_{EMF}$ ist die Differenz $\Delta U$ zwischen der zu erwartenden induzierten Spannung $U_{IND}^{EXP}(t_{EMF})$ und der tatsächlich induzierten Spannung $U_{IND}(t_{EMF})$ mit $\Delta U= U_{IND}^{EXP}(t_{EMF})- U_{IND}(t_{EMF})$ bestimmbar.

Aus der Differenz $\Delta U$ und der Steigung $m = \frac{\delta U_{IND}^{EXP}}{\delta t}$ der zu erwartenden induzierten Spannung $U_{IND}^{EXP}$, die sich mittels der aufgenommenen Spannungswerte $U_{IND}^{EXP}(t_1)$ und $U_{IND}^{EXP}(t_2)$ wie folgt bestimmt: $m = \frac{\delta U_{IND}^{EXP}}{\delta t}=(U_{IND}^{EXP}(t_2)- U_{IND}^{EXP}(t_1))/(t_2-t_1)$, lässt sich ferner der Kommutierungsfehler $\Delta t$ ermitteln, gemäß: $\Delta t= \Delta U/m$.

Der Kommutierungsfehler $\Delta t$ ist, wie oben bereits dargelegt, ein Wert für das zeitliche Auseinanderlaufen zwischen der tatsächlichen Rotorstellung und der Kommutierung K1. Dies ist in Fig. 6 dadurch verdeutlicht, dass der Kommutierungsfehler $\Delta t=t_{EMF}-t_3$ als Differenz zwischen dem Messzeitpunkt $t_{EMF}$, zu dem die induzierte Spannung den Wert $U_{IND}(t_{EMF})$ annimmt, und dem dritten Zeitpunkt $t_3$ dargestellt ist, wobei der dritte Zeitpunkt $t_3$ den Zeitpunkt beschreibt, zu dem ein solcher Wert gemäß er zu erwartenden induzierten Spannung $U_{IND}^{EXP}$ für eine mit der Kommutierung K1 optimal abgestimmte Rotorstellung zu erwarten gewesen wäre $U_{IND}^{EXP}(t_3)= U_{IND}(t_{EMF})$.

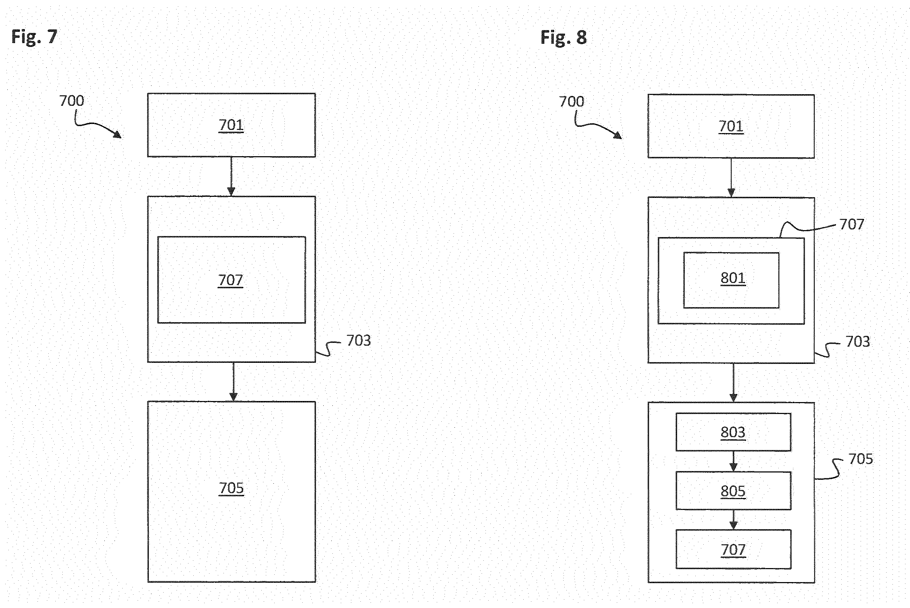

Fig. 7 zeigt ein Ablaufdiagramm eines Verfahrens 700 zum Anfahren eines BLDC-Motors 100 gemäß einer Ausführungsform, wobei der BLDC-Motor 100 entsprechend Fig. 1 ausgebildet ist. Gemäß Fig. 7 umfasst das Verfahren 700 zum Anfahren eines BLDC-Motors 100:

eine Startphase 701, wobei in der Startphase 701 der BLDC-Motor 100 mit einer vorbestimmten aufgezwungenen Kommutierung K1 angefahren und der Rotor 107 auf eine Rotorgeschwindigkeit beschleunigt wird, die ein Bestimmen einer durch den rotierenden Rotor 107 in den Erregerspulen 101, 103, 105 induzierten Spannung $U_{IND}$ ermöglicht; eine Messphase 703, wobei in der Messphase 703 bei Erreichen der Rotorgeschwindigkeit die Verfahrensschritte des Verfahrens 200 zum Bestimmen der Rotorstellung entsprechend der Beschreibung zu Fig. 2 bis Fig. 6 ausgeführt werden, und wobei nach jeder Bestimmung 207 einer Rotorstellung nach dem Verfahren 200 zur Bestimmung einer Rotorstellung eine Anpassung 707 der Kommutierung gemäß der bestimmten Rotorstellung durchgeführt wird; und eine Betriebsphase 705, wobei in der Betriebsphase bei Erreichen eines Überführungszeitpunkts $t_{Ü}$ zur weiteren Beschleunigung und zum Betrieb des BLDC-Motors 100 die Kommutierung K1 in eine Blockkommutierung BK überführt wird.

In der Startphase 701 kann der BLDC-Motor 100 ohne Kenntnis einer Rotorstellung des BLDC-Motors 100 mittels einer aufgezwungenen Kommutierung K1 gestartet und beschleunigt werden. Vorzugsweise kann diese aufgezwungene Kommutierung K1 eine Trapez-Kommutierung sein.

Wahlweise wäre auch eine Sinus-Kommutierung oder eine andere Kommutierung , welche nicht zur Erfindung gehören, denkbar, für die die Erregerspannungen der Erregerspulen des Motors 100 einen Verlauf mit wenigstens einem Abschnitt A aufweisen, in dem der Verlauf der Erregerspannungen $U_{101, 103, 105}$ eine nichtverschwindende endliche Steigung m aufweist.

Bei Erreichen einer Mindestgeschwindigkeit des Rotors 107, die für eine Messung der induzierten Spannung $U_{IND}$ benötigt wird, geht das Verfahren 700 zum Anfahren eines BLDC-Motors 100 in eine Messphase 703 über, in der das Verfahren 200 zum Bestimmen einer Rotorstellung mit den oben beschriebenen Verfahrensschritten durchgeführt wird.

In der Messphase 703 wird ferner nach der Bestimmung der Rotorstellung gemäß dem Verfahren 200 zum Bestimmen einer Rotorstellung in einem weiteren Verfahrensschritt 707 die Kommutierung K1 an die bestimmte Rotorstellung angepasst.

In der Messphase 703 kann vorgesehen sein, dass zu jeder Bestimmung der Rotorstellung nach Verfahren 200 eine Anpassung der Kommutierung K1 nach dem weiteren Verfahrensschritt 707 vorgenommen wird. So kann beispielsweise für jeden gemessenen Spannungswert $U_{IND}(t_{EMF})$ der induzierten Spannung $U_{IND}$, für den nach dem vierten Verfahrensschritt 207 eine Rotorstellung bestimmt wird, darauffolgend die Kommutierung K1 an die jeweilige bestimmte Rotorstellung angepasst entsprechend dem weiteren Verfahrensschritt 707 werden, bevor ein weiterer Spannungswert $U_{IND}(t_{EMF})$ gemessen wird.

Indem, wie oben dargelegt, in jedem Abschnitt A eines jeden Trapezes einer jeden Erregerspule 101, 103, 105 eine Mehrzahl von Messwerten $U_{IND}(t_{EMF})$ für die induzierte Spannung $U_{IND}$ aufgenommen werden können, können in der Messphase 703 für jede vollständige Rotorumdrehung eine Mehrzahl von Anpassungen der Kommutierung K1 an die Mehrzahl von bestimmten Rotorstellungen vorgenommen werden.

Bei Erreichen eines Überführungszeitpunkts $t_{Ü}$ geht das Verfahren 700 zum Anfahren eines BLDC-Motors 100 in eine Betriebsphase 705 über, in der die Kommutierung K1 in eine Blockkommutierung BK überführt wird.

In der Betriebsphase ist das Anfahren des BLDC-Motors 100 abgeschlossen und ein normaler Betrieb des BLDC-Motors 100 ist ermöglicht. Eine weitere Beschleunigung des BLDC-Motors 100 ist jedoch weiterhin möglich.

Ebenfalls können weiterhin Rotorstellungen bestimmt und die Blockkommutierung BK an die bestimmten Rotorstellungen angepasst werden.

Fig. 8 zeigt ein Ablaufdiagramm des Verfahrens 700 zum Anfahren eines BLDC-Motors 100 gemäß einer weiteren Ausführungsform, wobei die Startphase 701 der Startphase 701 gemäß der Beschreibung zu Fig. 7 entspricht. Nach der Ausführungsform der Fig. 8 umfasst der weitere Verfahrensschritt 707 des Anpassens der Kommutierung K1 an die bestimmte Rotorstellung den zusätzlichen Verfahrensschritt 801 des Minimierens des Kommutierungsfehlers $\Delta t$.

Wie oben dargelegt, stellt der Kommutierungsfehler $\Delta t$ ein Maß für die Abweichung zwischen der Kommutierung K1 und der Rotorstellung dar. Zur Anpassung der Kommutierung wird die an den Erregerspulen 101, 103, 105 jeweils anliegende Erregerspannung $U_{101, 103\ 105}$ derart verändert, dass der Kommutierungsfehler $\Delta t$ einen minimalen Wert annimmt beziehungsweise sich einem vorbestimmten Grenzwert des Kommutierungsfehlers $\Delta t$ anpasst.

Der vorbestimmte Grenzwert des Kommutierungsfehlers $\Delta t$ kann dabei einer Abstimmung zwischen Kommutierung K1 und Rotorstellung entsprechen, die für einen effizienten Betrieb des BLDC-Motors 100 angestrebt wird.

Ferner umfasst nach der Ausführungsform in Fig. 8 die Betriebsphase 705 den ersten weiteren Verfahrensschritt 803 des Bestimmens einer induzierten Spannung $U_{IND}$ und zweiten weiteren Verfahrensschritt 805 des Bestimmens einer Rotorstellung, sowie den weiteren Verfahrensschritt 707 des Anpassens der Blockkommutierung BK an die ermittelte Rotorstellung.

Wie für den Betrieb eines BLDC-Motors 100 in Blockkommutierung üblich, wird die induzierte Spannung $U_{IND}$ in der Betriebsphase 705 zu den Zeitpunkten ermittelt, in denen eine jeweilige Erregerspule 101, 103, 105 sich in einem hochohmigen Zustand befindet. Auf ein zusätzliches Unterbrechen der jeweiligen Erregerspannung $U_{101, 103, 105}$, vergleichbar zum ersten Verfahrensschritt 201 entsprechend zur Beschreibung zu Fig. 2, kann in der Betriebsphase 705 folglich verzichtet werden. Die Bestimmung einer Rotorstellung anhand der induzierten Spannung $U_{IND}$ kann gemäß der üblichen Vorgehensweise für mit Blockkommutierung betriebene BLDC-Motoren 100 erfolgen.

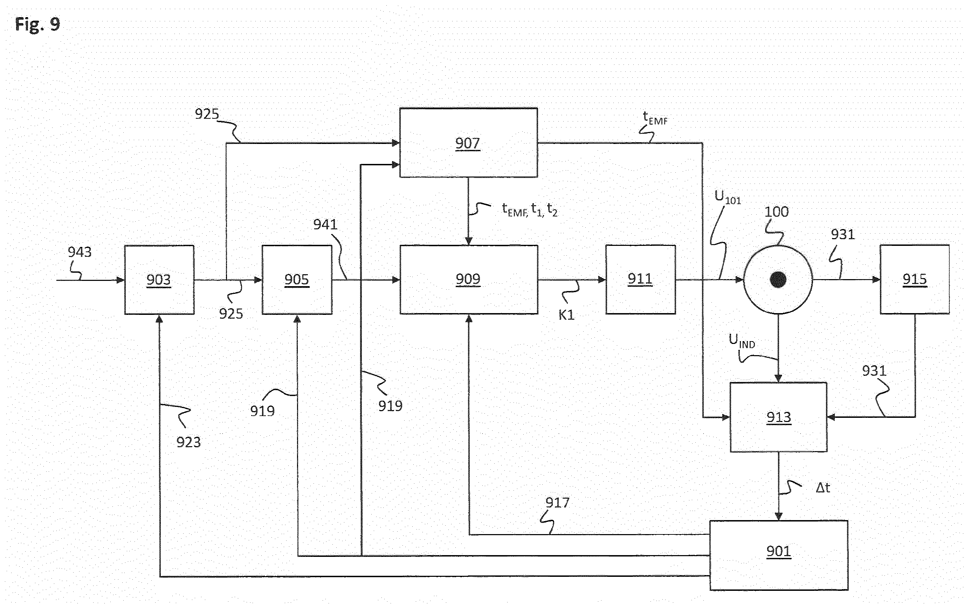

Fig. 9 zeigt ein Blockschaltbild einer Steuerungseinrichtung 111 des BLDC-Motors 100 entsprechend Fig. 1 gemäß einer Ausführungsform.

Gemäß der Ausführungsform in Fig. 9 umfasst die Steuerungseinrichtung 111 einen Beobachter 901, ein Positionsregelungsmodul 903, ein Geschwindigkeitsregelungsmodul 905, ein Messzeitpunktbestimmungsmodul 907, ein Kommutierungsberechnungsmodul 909, ein Leistungssteuerungsmodul 911, ein Abweichungsbestimmungsmodul 913 und ein Strommessungsmodul 915.

Beispielhaft wird das Blockschaltbild anhand von der ersten Erregerspule 101 beschrieben, an der die zugehörige erste Erregerspannung $U_{101}$ gemäß der Kommutierung K1 angelegt ist. Die Beschreibung ist analog übertragbar auf die zweite Erregerspule 103 und/oder dritte Erregerspule 105 und/oder gegebenenfalls weiterer Erregerspulen gemäß nicht dargestellter Ausführungsformen des BLDC-Motors 100.

Gemäß der Ausführungsform in Fig. 9 ist der Beobachter 901 mit dem Positionsregelungsmodul 903, dem Geschwindigkeitsregelungsmodul 905, dem Messzeitpunktbestimmungsmodul 907, dem Kommutierungsberechnungsmodul 909, dem Abweichungsbestimmungsmodul 911 und dem Strommessungsmodul 915 verbunden und ist ausgebildet, mit den genannten Modulen einen Datenaustausch durchzuführen.

Der Beobachter 901 ist ausgebildet, aus einem Wert für den Kommutierungsfehler $\Delta t$, den der Beobachter 901 vom Abweichungsbestimmungsmodul 913 erhält, eine Ist-Rotorstellung 917 des Rotors 107 im Verhältnis zur ersten Erregerspule 101 des BLDC-Motors 100, eine Ist-Rotorgeschwindigkeit 919 des Rotors 107 sowie eine Ist-Rotorposition 923 des Rotors 107 zu bestimmen.

Die Ist-Rotorposition 923 beschreibt hierbei die Stellung des Rotors 107 in Relation zu einem Rotorpositionsreferenzwert, beispielsweise einer Ausgangsposition des Rotors 107, und umfasst sämtliche seit Start des BLDC-Motors 100 durch den Rotor 107 durchlaufenen Winkelwerte. Die Ist-Rotorposition 923 ist damit ein Wert für die Anzahl absolvierter Rotorumdrehungen.

Das Positionsregelungsmodul 903 ist ausgebildet, anhand einer vom Beobachter 901 übermittelten Ist-Rotorposition 923 und einer Soll-Rotorposition 945, die von einer für jeden Motorbetrieb individuellen Leistungsvorgabe des BLDC-Motors 100 abhängt, eine Soll-Rotorgeschwindigkeit 925 zu bestimmen.

Das Geschwindigkeitsregelungsmodul 905 ist ausgebildet, anhand einer vom Beobachter 901 übermittelten Ist-Rotorgeschwindigkeit 919 und der vom Positionsregelungsmodul 903 erstellten Soll-Rotorgeschwindigkeit 925 einen der jeweiligen Soll-Rotorgeschwindigkeit 925 entsprechenden Spannungswert 941 der ersten Erregerspannung $U_{101}$ zu bestimmen, der einem Amplitudenwert der ersten Erregerspannung $U_{101}$ gemäß der Kommutierung K1 entspricht.

Das Messzeitpunktbestimmungsmodul 907 ist ausgebildet, anhand der vom Beobachter 901 übermittelten Ist-Rotorgeschwindigkeit 919 und/oder anhand der vom Positionsregelungsmodul 903 übermittelten Soll-Rotorgeschwindigkeit 925 die ersten und zweiten Zeitpunkte $t_1$, $t_2$ der Unterbrechungen und die Messzeitpunkte $t_{EMF}$ zu bestimmen. Je nach Ist-Rotorgeschwindigkeit 919 und nach Steilheit m der Abschnitte A des Verlaufs der ersten Erregerspannung $U_{101}$ kann das Messzeitpunktbestimmungsmodul 907 die Unterbrechungen kürzer oder länger gestalten und aufeinander folgende Unterbrechungen und aufeinanderfolgende Messzeitpunkte $t_{EMF}$ zeitlich kürzer oder länger nacheinander verorten, um zu erreichen, dass jeder Abschnitt A eine gleiche Anzahl von Messzeitpunkten $t_{EMF}$ aufweist.

Das Kommutierungsberechnungsmodul 909 ist ausgebildet, anhand des vom Geschwindigkeitsregelungsmodul 905 übermittelten Spannungswerts 941, anhand der vom Messzeitpunktbestimmungsmodul 907 übermittelten Messzeitpunkte $t_{EMF}$ und anhand des Spannungsverlaufs gemäß der Kommutierung K1, der im Kommutierungsberechnungsmodul 909 gespeichert sein oder von diesem ausgelesen werden kann, den Spannungsverlauf der ersten Erregerspannung $U_{101}$ gemäß einer neuen, angepassten Kommutierung K1 und gemäß der bestimmten Soll-Rotorgeschwindigkeit 925 inklusive der ermittelten Unterbrechungen mit den Messzeitpunkten $t_{EMF}$ zu bestimmen.

Das Leistungssteuerungsmodul 911 ist ausgebildet, die erste Erregerspule 101 des BLDC-Motors 100 mit einer ersten Erregerspannung $U_{101}$ gemäß einer durch das Kommutierungsberechnungsmodul 909 bestimmten Kommutierung 939 zu beaufschlagen.

Das Strommessungsmodul 915 ist ausgebildet, einen Spulenstrom 931 der ersten Erregerspule 101 des BLDC-Motors 100 zu ermitteln.

Das Abweichungsbestimmungsmodul 913 ist ausgebildet, zu den Messzeitpunkten $t_{EMF}$ Messwerte für die induzierte Spannung $U_{IND}$ aufzunehmen und gemäß dem Verfahren 200 zum Bestimmen einer Rotorstellung aus der induzierten Spannung $U_{IND}$ den Kommutierungsfehler $\Delta t$ zu ermitteln. Ferner kann das Abweichungsbestimmungsmodul 913 den vom Strommessungsmodul 915 ermittelten Spulenstrom 931 zur Korrektur der gemessenen zu erwartenden induzierten Spannung $U_{IND}^{EXP}$ bezüglich des Spulenwiderstands berücksichtigen.

Gemäß der Ausführungsform der Fig. 9 kann eine Bestimmung einer Ist-Rotorstellung 917 und eine Anpassung der Kommutierung K1 an die bestimmte Rotorstellung gemäß dem Verfahren 200 zur Bestimmung einer Rotorstellung und dem Verfahren 700 zum Anfahren eines BLDC-Motors 100 wie folgt erfolgen.

Beschrieben wird eine Bestimmung der Rotorstellung und eine Anpassung der Kommutierung K1, die während der Messphase 703 des Verfahrens 700 zum Anfahren eines BLDC-Motors 100 stattfindet. Zeitgleich zur Bestimmung der Rotorstellung und zum Anpassen der Kommutierung K1 an die bestimmte Rotorstellung findet ein Beschleunigungsvorgang des Motors 100 statt.

Zur Beschleunigung des Motors 100 wird zu einer Ist-Rotorgeschwindigkeit 919 des Rotors 107, die einer Geschwindigkeit zu einem derzeitigen Zeitpunkt entspricht, eine Soll-Rotorgeschwindigkeit 925 bestimmt, die einer gemäß der jeweiligen Beschleunigung gewünschten Geschwindigkeit entspricht, und der Motor mit der neu bestimmten Soll-Geschwindigkeit betrieben.

Die Anpassung der Kommutierung K1 an eine bestimmte Rotorstellung umfasst ebenfalls eine Überführung einer Ist-Rotorstellung 917 in eine Soll-Rotorstellung.

Hierbei erfüllen das Positionsregelungsmodul 903 und das Kommutierungsberechnungsmodul 909 unterschiedliche Funktionen.

Das Positionsregelungsmodul 903 nimmt eine Soll-Rotorposition 945 auf und regelt die Bewegung des Motors so, dass sich die Ist-Rotorposition 923 dieser Soll-Rotorposition 945 angleicht, wodurch eine Beschleunigung des BLDC-Motors 100 erzielt wird.

Das Kommutierungsberechnungsmodul 909 gibt hingegen die erste Erregerspannung $U_{101}$ passend zur aktuellen Ist-Rotorstellung 917 aus, um die Kommutierung K1 an die Rotorstellung anzupassen.

Im Folgenden wird dies nicht explizit voneinander getrennt werden, sodass eine Soll-Rotorgeschwindigkeit 925 sowohl der Motorbeschleunigung als auch der Anpassung der Kommutierung K1 an die Rotorstellung genügt.

Zur Anpassung der Kommutierung K1 an eine bestimmte Rotorstellung während eines Beschleunigungsprozesses des Motors 100 werden zunächst vom Beobachter 901 eine Ist-Rotorstellung 917, eine Ist-Rotorgeschwindigkeit 919 und eine Ist-Rotorposition 923 ermittelt.

Die ermittelte Ist-Rotorposition 923 wird darauffolgend vom Beobachter 901 an das Positionsregelungsmodul 903 übermittelt. Die Ist-Rotorgeschwindigkeit 919 wird vom Beobachter 901 an das Geschwindigkeitsregelungsmodul 905 und das Messzeitpunktbestimmungsmodul 907 übermittelt. Die Ist-Rotorstellung 917 wird vom Beobachter 901 an das Kommutierungsberechnungsmodul 909 übermittelt.

Das Positionsregelungsmodul 903 ermittelt gemäß der Ist-Rotorposition 923 und der Soll-Rotorposition 945, die das Positionsregelungsmodul 903 aus einer externen individuellen Beschleunigungsvorgabe erhält, eine Soll-Rotorgeschwindigkeit 925 und übermittelt diese an das Geschwindigkeitsregelungsmodul 905 und an das Messzeitpunktbestimmungsmodul 907.

Die externe individuelle Beschleunigungsvorgabe umfasst hierbei eine Sequenz von Soll-Positionen, wobei für jeden Zyklus eine neue Soll-Position bestimmt ist. Aus der Sequenz der Soll-Positionen ergibt sich eine Soll-Geschwindigkeit bzw. Soll-Beschleunigung.

Anhand der derzeitigen Ist-Rotorgeschwindigkeit 919 und der neuen Soll-Rotorgeschwindigkeit 925 bestimmt das Messzeitpunktbestimmungsmodul 907 die ersten und zweiten Zeitpunkte $t_1$, $t_2$, und die Messzeitpunkte $t_{EMF}$, zu denen die erste Erregerspannung $U_{101}$ für die kommenden Messungen der induzierten Spannung $U_{IND}$ zu unterbrechen ist und zu denen die Messwerte der induzierten Spannung $U_{IND}$ aufzunehmen sind, und übermittelt diese ersten und zweiten Zeitpunkte $t_1$, $t_2$ und Messzeitpunkte $t_{EMF}$ an das Kommutierungsberechnungsmodul 909.

Das Geschwindigkeitsregelungsmodul 905 übermittelt an das Kommutierungsberechnungsmodul 909 einen der Soll-Geschwindigkeit entsprechenden Spannungswert 941. Der entsprechende Spannungswert 941 kann hierbei von einer Abweichung zwischen einer Ist-Rotorgeschwindigkeit 919 und einer Soll-Rotorgeschwindigkeit 925 sowie der Historie dieser Abweichung abhängen.

Anhand des Spannungswerts 941, der ersten und zweiten Zeitpunkte $t_1$, $t_2$ und Messzeitpunkte $t_{EMF}$ und des Verlaufs der ersten Erregerspannung $U_{101}$ gemäß der Kommutierung K1, der dem Kommutierungsberechnungsmodul 909, wie oben beschrieben zugänglich ist, bestimmt das Kommutierungsberechnungsmodul 909 die Kommutierung K1, insbesondere die Amplitude der Trapeze und die Steigung m der Flanken bei einer Trapezkommutierung und die Anordnung der Messzeitpunkte $t_{EMF}$ und übermittelt die neue Kommutierung K1 an eine Leistungsstufe 911.

Die Leistungsstufe 911 beaufschlagt die erste Erregerspule 101 des BLDC-Motors 100 mit einer ersten Erregerspannung $U_{101}$ gemäß der neuen Kommutierung K1 samt Unterbrechungen der ersten Erregerspannung $U_{101}$ zu den bestimmten Messzeitpunkten $t_{EMF}$.

Zu den Messzeitpunkten $t_{EMF}$ nimmt das Abweichungsbestimmungsmodul 913 jeweils einen Wert der in der ersten Erregerspule 101 des BLDC-Motors 100 induzierten Spannung $U_{IND}$ auf. Hierzu erhält das Abweichungsbestimmungsmodul 913 von dem Messzeitpunktbestimmungsmodul 907 entsprechende Aufforderungen, zu den Messzeitpunkten $t_{EMF}$ Messwerte der induzierten Spannung $U_{IND}$ aufzunehmen.

Vom Strommessungsmodul 915 wird ein Spulenstrom 931 der ersten Erregerspule 101 des BLDC-Motors 100 ermittelt und an das Abweichungsbestimmungsmodul 913 übermittelt.

Das Abweichungsbestimmungsmodul 913 nutzt den Spulenstrom 931, um die ermittelte induzierte Spannung $U_{IND}$ auf Verlusteffekt, primär durch den Spulenwiderstand hervorgerufen, zu korrigieren. Anhand der korrigierten induzierten Spannung $U_{IND}$ ermittelt das Abweichungsbestimmungsmodul 913, wie oben dargelegt,

den Kommutierungsfehler $\Delta t$ und übermittelt diesen an den Beobachter 901.

Anhand des Kommutierungsfehlers $\Delta t$ ermittelt der Beobachter 901 eine neue Ist-Rotorstellung 917, eine neue Ist-Rotorgeschwindigkeit 919 und eine neue Ist-Rotorposition 923. Zur Bestimmung der neuen Ist-Rotorposition 923 berücksichtigt der Beobachter 901 ferner einen Zeitwert, der dem Beobachter 901 eine Bestimmung einer Rotorumdrehungszahl ermöglicht.

Die ermittelte neue Ist-Rotorstellung 917 übermittelt der Beobachter 901 darauffolgend zur weiteren Anpassung der Kommutierung K1 an das Kommutierungsberechnungsmodul 909. Die ermittelte neue Ist-Rotorgeschwindigkeit 919 übermittelt der Beobachter 901 wiederum an das Geschwindigkeitsregelungsmodul 905 und an das Messzeitpunktbestimmungsmodul 907. Und die neue Ist-Rotorposition 923 übermittelt der Beobachter 901 an das Positionsregelungsmodul 903.

Das oben beschriebene Vorgehen zur Anpassung der Kommutierung K1 und zur Beschleunigung des BLDC-Motors 100 kann auch für Zeitpunkte durchgeführt werden, die nicht den Messzeitpunkten $t_{EMF}$ entsprechen, und zu denen folglich keine Messwerte der induzierten Spannung $U_{IND}$ aufgenommen werden und keine Kommutierungsfehler $\Delta t$ bestimmt werden. Für solche Zeitpunkte kann der Beobachter 901 zur Bestimmung einer neuen Ist-Rotorposition 923, einer neuen Ist-Rotorgeschwindigkeit 919 und einer neuen Ist-Rotorstellung 917 den vorherigen Kommutierungsfehler $\Delta t$ verwenden, bis durch eine neue Messung zu einem späteren Messzeitpunkt $t_{EMF}$ ein neuer Kommutierungsfehler $\Delta t$ bestimmt ist.

Wie oben dargelegt, findet eine Anpassung der Kommutierung K1 an eine bestimmte Rotorstellung nur in der Messphase 703 und der Betriebsphase 705 statt. In der Startphase 701 wird der Motor 100 mit einer aufgezwungenen Kommutierung K1 betrieben und mit dieser beschleunigt.

Der Beschleunigungsprozess kann in der Startphase 701 derart gemäß der oben beschriebenen Vorgehensweise durchgeführt werden, dass eine neue Ist-Rotorposition 923, eine neue Ist-Rotorgeschwindigkeit 919 und eine neue Ist-Rotorstellung 917 durch den Beobachter 901 aus der jeweiligen vorangegangenen Soll-Rotorposition 945, der Soll-Rotorgeschwindigkeit 925 und der Soll-Rotorstellung bestimmt werden, indem der neue Ist-Wert dem vorangegangenen Soll-Wert gleichgesetzt wird. Auf eine wirkliche Anpassung der Werte beziehungsweise auf eine tatsächlich durch Messung durchgeführte Bestimmung der Ist-Werte kann verzichtet werden.

Wird für eine Anwendung nur eine Geschwindigkeitsregelung, aber keine Positionsregelung benötigt, so kann das Positionsregelungsmodul 903 entfallen. Statt der Soll-Rotorposition 945 wird in diesem Fall direkt die Soll-Rotorgeschwindigkeit 925 extern vorgegeben.

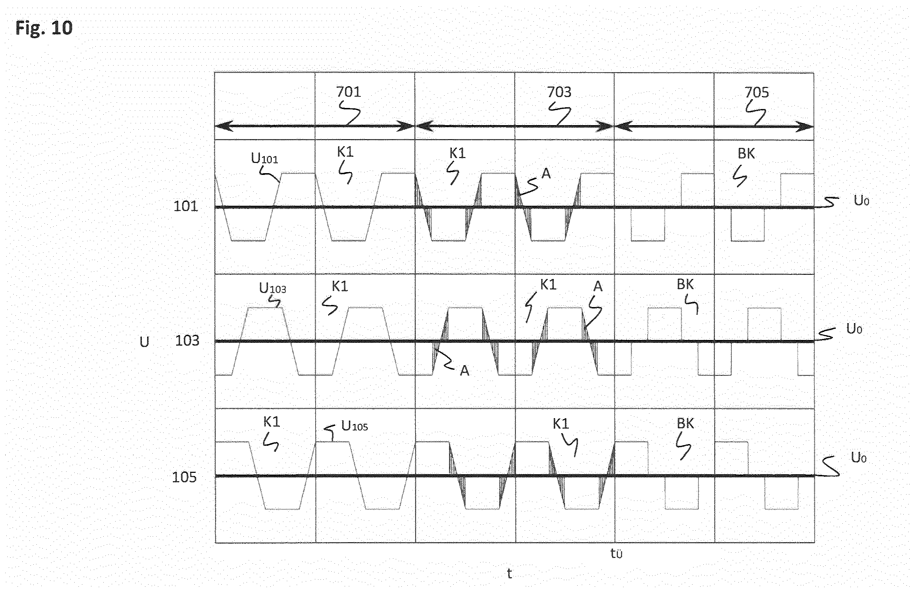

Fig. 10 zeigt ein Spannungs-Zeit-Diagramm des Spannungsverlaufs der Erregerspannung $U_{101, 103, 105}$ nach einem zuvor beschriebenen Verfahren 700 zum Anfahren eines BLDC-Motors 100 gemäß einer Ausführungsform, wobei die Zeit t auf der X-Achse und die Spannung U auf der Y-Achse aufgetragen ist.

In Fig. 10 sind zeitliche Verläufe der jeweiligen Erregerspannung $U_{101, 103, 105}$ für drei Erregerspulen 101, 103 und 105 dargestellt.

Gemäß der in Fig. 10 dargestellten Ausführungsform weist in der Startphase 701 die jeweilige Erregerspannung $U_{101, 103, 105}$ das Profil der aufgezwungenen trapezförmigen Kommutierung K1 auf. In der Startphase 701 wird der Motor 100 beschleunigt, ohne die Rotorstellung zu bestimmen oder eine Anpassung der Kommutierung K1 durchzuführen.

In der daran anschließenden Messphase 703 werden in den jeweiligen Abschnitten A, die in der Trapez-Kommutierung durch die Flanken der jeweiligen Trapeze gegeben sind, zu einer Mehrzahl von Zeitpunkten $t_1$, $t_2$, $t_{EMF}$ die einzelnen Erregerspannungen $U_{101, 103, 105}$ unterbrochen, zu einer Mehrzahl von Messzeitpunkten $t_{EMF}$ eine Mehrzahl von Spannungswerten $U_{IND}(t_{EMF})$ für die jeweils induzierte Spannung $U_{IND}$ aufgenommen und gemäß dem Verfahren 200 zum Bestimmen einer Rotorstellung für jeden aufgenommenen Spannungswert $U_{IND}(t_{EMF})$ eine Rotorstellung bestimmt und gemäß dem weiteren Verfahrensschritt 707 eine Anpassung der Kommutierung K1 an die bestimmte Rotorstellung vorgenommen.

Zur detaillierten Erläuterung und Darstellung der Unterbrechungen der einzelnen Erregerspannungen $U_{101, 103, 105}$ und des Aufnehmens von Spannungswerten $U_{IND}(t_{EMF})$ für die jeweils induzierte Spannung $U_{IND}$ zu einer Mehrzahl von Messzeitpunkten $t_{EMF}$ in den Abschnitten A wird auf Fig. 3 verwiesen.

Bei Erreichen eines Überführungszeitpunkts $t_{Ü}$ wird die Kommutierung K1 in eine Blockkommutierung BK überführt und der BLDC-Motor 100 wird in der Betriebsphase 705 betrieben.

Zum Überführungszeitpunkt $t_{Ü}$ ist die Kommutierung K1 derart an die Rotorstellung angepasst, dass ein Betrieb des BLDC-Motors 100 in Blockkommutierung BK problemlos möglich ist.

Der Überführungszeitpunkt $t_{Ü}$ kann somit an das Erreichen eines Grenzwerts des Kommutierungsfehlers $\Delta t$ gekoppelt sein, sodass eine Überführung der Kommutierung K1 in die Blockkommutierung BK erst stattfindet, wenn der Kommutierungsfehler $\Delta t$ auf einen Wert minimiert und die Kommutierung K1 somit derart an die Rotorstellung angepasst ist, dass ein Betrieb des BLDC-Motors 100 in Blockkommutierung BK ermöglicht ist.

Alternativ kann der Überführungszeitpunkt $t_{Ü}$ an eine vorbestimmte Drehzahl des BLDC-Motors 100 gekoppelt sein, für die erfahrungsgemäß der Kommutierungsfehler $\Delta t$ ausreichend minimiert und die Kommutierung K1 für eine Überführung in die Blockkommutierung ausreichend angepasst ist.

Während der Betriebsphase 705 können weiterhin die Rotorstellung bestimmt und die Blockkommutierung BK an die bestimmte Rotorstellung angepasst werden. Das Messen der induzierten Spannung $U_{IND}$ kann, wie für die Blockkommutierung BK üblich, für Zeitpunkte stattfinden, für die die jeweilige Erregerspule 101, 103, 105 hochohmig ist. Das Messen der induzierten Spannung $U_{IND}$, sowie das Bestimmen einer Rotorstellung und das Anpassen der Blockkommutierung BK sind in Fig. 10 nicht dargestellt.

**Patentansprüche**

1. Verfahren (200) zum Bestimmen einer Rotorstellung eines BLDC-Motors (100) mit einem magnetischen Rotor (107) und einem Stator (109) aufweisend zumindest eine Erregerspule (101, 103, 105), an der eine Erregerspannung ($U_{101, 103, 105}$) gemäß einer Trapez-Kommutierung (K1) angelegt ist, die Verfahrensschritte umfassend:

   Unterbrechen (201) der an der zumindest einen Erregerspule (101, 103, 105) anliegenden Erregerspannung ($U_{101, 103, 105}$), wobei die Erregerspannung ($U_{101, 103, 105}$) einen trapezförmigen Verlauf mit ansteigenden und abfallenden Flanken aufweist, in denen der Verlauf der Flanken der Erregerspannung ($U_{101, 103, 105}$) eine nichtverschwindende endliche Steigung der Flanken (m) aufweist, wobei die Erregerspannung ($U_{101, 103, 105}$) in einer ansteigende oder abfallende Flanke des trapezförmigen Verlaufs unterbrochen wird, und wobei zum Zeitpunkt des Unterbrechens die Erregerspannung ($U_{101, 103, 105}$) einen von Null verschiedenen Wert aufweist;
   Aufnehmen (203) einer in der zumindest einen Erregerspule (101, 103, 105) durch den magnetischen Rotor (107) induzierten Spannung ($U_{IND}$);
   Wiederherstellen (205) der Erregerspannung ($U_{101, 103, 105}$) auf einen von Null verschiedenen Wert gemäß der ansteigenden oder abfallenden Flanke des trapezförmigen Verlaufs; das Verfahren ist **gekennzeichnet durch** das Bestimmen (207) einer Rotorstellung des Rotors (107) zur zumindest einen Erregerspule (101, 103, 105) basierend auf einer ermittelten Abweichung zwischen der aufgenommenen induzierten Spannung ($U_{IND}$) und der Erregerspannung ($U_{101, 103, 105}$) der ansteigenden oder abfallenden Flanke des trapezförmigen Verlaufs .

2. Verfahren (200) nach Anspruch 1, wobei die Erregerspannung ($U_{101, 103, 105}$) für eine Mehrzahl von ersten Zeitpunkten ($t_1$) unterbrochen und für eine Mehrzahl von zweiten Zeitpunkten ($t_2$) wiederhergestellt wird, wobei für jede Unterbrechung der Erregerspannung ($U_{101, 103, 105}$) zwischen den ersten Zeitpunkten ($t_1$) und den zweiten Zeitpunkten ($t_{2,}$) die induzierte Spannung ($U_{IND}$) aufgenommen wird, und wobei für jede aufgenommene induzierte Spannung ($U_{IND}$) eine Rotorstellung bestimmt wird.

3. Verfahren (200) nach einem der vorangehenden Ansprüche, wobei der Stator (109) des BLDC-Motors (100) eine Mehrzahl von Erregerspulen (101, 103, 105) aufweist, an denen jeweils eine Erregerspannung ($U_{101, 103, 105}$) anliegt, wobei für jede der Erregerspulen (101, 103, 105) die Erregerspannung ($U_{101, 103, 105}$) zeitlich nacheinander unterbrochen und während der Unterbrechung eine in der jeweiligen Erregerspule (101, 103, 105) induzierte Spannung ($U_{IND}$) aufgenommen wird, und wobei für jede aufgenommene induzierte Spannung ($U_{IND}$) eine Rotorstellung bestimmt wird.

4. Verfahren (200) nach einem der vorangehenden Ansprüche, wobei der Verfahrensschritt Bestimmen (207) einer Rotorstellung die Verfahrensschritte umfasst:

   Vergleichen (501) der zu einem Messzeitpunkt ($t_{EMF}$) aufgenommenen induzierten Spannung ($U_{IND}(t_{EMF})$) mit einer für den Messzeitpunkt ($t_{EMF}$) und für eine Rotorstellung, auf die die Trapez-Kommutierung (K1) optimal abgestimmt ist, zu erwartenden induzierten Spannung ($U_{IND}^{EXP}(t_{EMF})$);
   Bilden (503) einer Differenz ($\Delta U$) zwischen der induzierten Spannung ($U_{IND}(t_{EMF})$) und der zu erwartenden induzierten Spannung ($U_{IND}^{EXP}(t_{EMF})$); und
   Bestimmen (505) eines Kommutierungsfehlers ($\Delta t$), wobei der Kommutierungsfehler ($\Delta t$) einer Zeitdifferenz ($t_{EMF}$)-($t_3$) zwischen dem Messzeitpunkt ($t_{EMF}$) und einem dritten Zeitpunkt ($t_3$) entspricht, und wobei für den dritten Zeitpunkt ($t_3$) die zu erwartende induzierte Spannung ($U_{IND}^{EXP}(t_3)$) gleich der induzierten Spannung ($U_{IND}(t_{EMF})$) zum Messzeitpunkt ($t_{EMF}$) ist, gemäß: ($U_{IND}(t_{EMF})$)= ($U_{IND}^{EXP}(t_3)$) ; und
   Ableiten (507) der Rotorstellung aus der gebildeten Differenz ($\Delta U$) und dem Kommutierungsfehler ($\Delta t$).

5. Verfahren (200) nach Anspruch 4, wobei die zu erwartende induzierte Spannung ($U_{IND}^{EXP}$) der Erregerspannung ($U_{101}$, $U_{103}$, $U_{105}$) entspricht.

**6.** Verfahren (200) nach Anspruch 4, wobei die zu erwartende induzierte Spannung $\left(U_{IND}^{EXP}\right)$ aus einer Datenbank ausgelesen wird.

**7.** Verfahren (200) nach einem der vorangehenden Ansprüche, wobei die in der zumindest einen Erregerspule (101, 103, 105) induzierte Spannung ($U_{IND}$) ein trapezförmiges oder sinusförmiges Profil aufweist.

**8.** Verfahren (700) zum Anfahren eines BLDC-Motors (100), umfassend:

eine Startphase (701), wobei in der Startphase der BLDC-Motor (100) mit einer vorbestimmten aufgezwungenen Kommutierung (K1) angefahren und der Rotor (107) auf eine Rotorgeschwindigkeit beschleunigt wird, die ein Aufnehmen (203) einer durch den rotierenden Rotor (107) in der zumindest einen Erregerspule (101, 103, 105) induzierten Spannung ($U_{IND}$) ermöglicht; eine Messphase (703), wobei in der Messphase bei Erreichen der Rotorgeschwindigkeit die Verfahrensschritte des Verfahrens (200) zum Bestimmen einer Rotorstellung nach einem der vorangehenden Ansprüche 1 bis 7 ausgeführt werden, und wobei nach jeder Bestimmung (207) einer Rotorstellung nach dem Verfahren (200) zum Bestimmen einer Rotorstellung nach einem der vorangehenden Ansprüche 1 bis 7 eine Anpassung (707) der Kommutierung (K1) an die bestimmte Rotorstellung durchgeführt wird; und eine Betriebsphase (705), wobei in der Betriebsphase bei Erreichen eines Überführungszeitpunkts ($t_Ü$) zur weiteren Beschleunigung und zum Betrieb des BLDC-Motors (100) die Kommutierung (K1) in eine Blockkommutierung (BK) überführt wird.

**9.** Verfahren (700) zum Anfahren eines BLDC-Motors (100) nach Anspruch 8, wobei die Betriebsphase (705) die Verfahrensschritte umfasst:

Aufnehmen (803) der in der zumindest einen Erregerspule (101, 103, 105) induzierten Spannung ($U_{IND}$); Bestimmen (805) einer Rotorstellung zur zumindest einen Erregerspule (101, 103, 105) anhand der aufgenommenen induzierten Spannung ($U_{IND}$); und Anpassen (707) der Kommutierung an die bestimmte Rotorstellung durchgeführt wird.

**10.** Verfahren (700) zum Anfahren eines BLDC-Motors (100) nach Anspruch 8 oder 9, wobei der Überführungszeitpunkt ($t_Ü$) durch Erreichen einer vorbestimmten Drehzahl des BLDC-Motors (100) und/oder durch Erreichen eines vorbestimmten Grenzwerts des Kommutierungsfehlers ($\Delta t$) bestimmt ist.

**11.** Verfahren (700) zum Anfahren eines BLDC-Motors (100) nach Anspruch 8, 9 oder 10, wobei die Anpassung (707) der Kommutierung (K1) ein Minimieren (801) des Kommutierungsfehlers ($\Delta t$) umfasst.

**12.** BLDC-Motor (100) mit einer Steuerungseinrichtung (111), die eingerichtet ist, ein Verfahren (200) zum Bestimmen einer Rotorstellung nach einem der vorhergehenden Ansprüche 1 bis 7 und/oder ein Verfahren (700) zum Anfahren eines BLDC-Motors (100) nach einem der Ansprüche 8 bis 11 auszuführen.

**Claims**

**1.** Method (200) for determining a rotor position of a BLDC motor (100) with a magnetic rotor (107) and a stator (109) having at least one exciter coil (101, 103, 105) to which an exciter voltage ($U_{101, 103, 105}$) is applied in accordance with a trapezoidal commutation process (K1), comprising the method steps:

interrupting (201) the exciter voltage ($U_{101, 103, 105}$) which is applied to the at least one exciter coil (101, 103, 105), wherein the exciter voltage ($U_{101, 103, 105}$) has a trapezoidal profile with rising and falling flanks in which the profile of the flanks of the exciter voltage ($U_{101, 103, 105}$) has a non-vanishing finite gradient of the flanks (m), wherein the exciter voltage ($U_{101, 103, 105}$) in a rising or falling flank of the trapezoidal profile is interrupted, and wherein at the time of the interruption the exciter voltage ($U_{101, 103, 105}$) has a value which is different from zero; capturing (203) a voltage ($U_{IND}$) which is induced in the at least one exciter coil (101, 103, 105) by the magnetic rotor (107); restoring (205) the exciter voltage ($U_{101, 103, 105}$) to a value which is different from zero in accordance with the rising or falling flank of the trapezoidal profile; which method is **characterized by** determining (207) a rotor position of the rotor (107) with respect to the at least one exciter coil (101, 103, 105) on the basis of an ascertained deviation between the captured induced voltage ($U_{IND}$) and the exciter voltage ($U_{101, 103, 105}$) of the rising or falling flank of the trapezoidal profile.

**2.** Method (200) according to Claim 1, wherein the exciter voltage ($U_{101, 103, 105}$) is interrupted for a multiplicity of first points in time ($t_1$) and is restored for a multiplicity of second points in time ($t_2$), wherein the induced voltage ($U_{IND}$) is captured for each interruption in the exciter voltage ($U_{101, 103, 105}$) between the first points in time ($t_1$) and the second points in time ($t_2$), and wherein a rotor position is determined for each captured induced voltage ($U_{IND}$).

3. Method (200) according to one of the preceding claims, wherein the stator (109) of the BLDC motor (100) has a multiplicity of exciter coils (101, 103, 105), to each of which an exciter voltage ($U_{101, 103, 105}$) is applied, wherein the exciter voltage ($U_{101, 103, 105}$) is interrupted in chronological succession for each of the exciter coils (101, 103, 105), and during the interruption a voltage ($U_{IND}$) which is induced in the respective exciter coil (101, 103, 105) is captured, and wherein a rotor position is determined for each captured induced voltage ($U_{IND}$).

4. Method (200) according to one of the preceding claims, wherein the method step of determining (207) a rotor position comprises the method steps:

comparing (501) the induced voltage ($U_{IND}(t_{EMF})$) which is captured at a measuring time ($t_{EMF}$) with an induced voltage $(U_{IND}^{EXP}(t_{EMF}))$ which is to be expected for the measuring time ($t_{EMF}$) and for a rotor position to which the trapezoidal commutation process (K1) is matched to an optimum degree;
forming (503) a difference ($\Delta U$) between the induced voltage ($U_{IND}(t_{EMF})$) and the induced voltage $(U_{IND}^{EXP}(t_{EMF}))$ which is to be expected; and
determining (505) a commutation error ($\Delta t$), wherein the commutation error ($\Delta t$) corresponds to a time difference ($t_{EMF}$)-($t_3$) between the measuring time ($t_{EMF}$) and a third point in time ($t_3$), and wherein for the third point in time ($t_3$) the induced voltage $(U_{IND}^{EXP}(t_3))$ which is to be expected is equal to the induced voltage ($U_{IND}(t_{EMF})$) at the measuring time ($t_{EMF}$), according to: ($U_{IND}(t_{EMF})$)= $(U_{IND}^{EXP}(t_3)$ ; and
deriving (507) the rotor position from the difference ($\Delta U$) formed and the commutation error ($\Delta t$).

5. Method (200) according to Claim 4, wherein the induced voltage $(U_{IND}^{EXP})$ which is to be expected corresponds to the exciter voltage ($U_{101, 103, 105}$) .

6. Method (200) according to Claim 4, wherein the induced voltage $(U_{IND}^{EXP})$ which is to be expected is read out from a database.

7. Method (200) according to one of the preceding claims, wherein the voltage ($U_{IND}$) which is induced in the at least one exciter coil (101, 103, 105) has a trapezoidal or sinusoidal profile.

8. Method (700) for starting a BLDC motor (100), comprising:

a start phase (701), wherein in the start phase the BLDC motor (100) is started with a predetermined forced commutation process (K1), and the rotor (107) is accelerated to a rotor speed which permits capturing (203) of a voltage ($U_{IND}$) which is induced in the at least one exciter coil (101, 103, 105) by the rotating rotor (107) ;
a measuring phase (703), wherein when the rotor speed is reached the method steps of the method (200) for determining a rotor position according to one of the preceding Claims 1 to 7 are executed in the measuring phase, and wherein after each determination (207) of a rotor position according to the method (200) for determining a rotor position according to one of the preceding Claims 1 to 7 adaptation (707) of the commutation process (K1) to the determined rotor position is carried out; and
an operating phase (705), wherein in the operating phase the commutation process (K1) is transformed into a block commutation process (BK) when a transformation time ($t_{Ü}$) for further acceleration and for operation of the BLDC motor (100) is reached.

9. Method (700) for starting a BLDC motor (100) according to Claim 8, wherein the operating phase (705) comprises the method steps:

capturing (803) the voltage ($U_{IND}$) which is induced in the at least one exciter coil (101, 103, 105);
determining (805) a rotor position with respect to the at least one exciter coil (101, 103, 105) on the basis of the captured induced voltage ($U_{IND}$); and
adapting (707) the commutation process to the determined rotor position.

10. Method (700) for starting a BLDC motor (100) according to Claim 8 or 9, wherein the transformation time ($t_{Ü}$) is determined by reaching a predetermined rotational speed of the BLDC motor (100) and/or by reaching a predetermined limiting value of the commutation error ($\Delta t$).

**11.** Method (700) for starting a BLDC motor (100) according to Claim 8, 9 or 10, wherein the adaptation (707) of the commutation process (K1) comprises minimizing (801) the commutation error ($\Delta$t).

**12.** BLDC motor (100) with a control device (111) which is configured to execute a method (200) for determining a rotor position according to one of the preceding Claims 1 to 7 and/or a method (700) for starting a BLDC motor (100) according to one of Claims 8 to 11.

**Revendications**

**1.** Procédé (200) permettant de déterminer une position de rotor d'un moteur à courant continu sans balai, BLDC, (100), comprenant un rotor magnétique (107) et un stator (109) présentant au moins une bobine d'excitation (101, 103, 105) à laquelle est appliquée une tension d'excitation ($U_{101, 103, 105}$) selon une commutation trapézoïdale (K1), les étapes de procédé consistant à :

interrompre (201) la tension d'excitation ($U_{101,103,105}$) appliquée à ladite au moins une bobine d'excitation (101, 103, 105), la tension d'excitation ($U_{101,103,105}$) présentant un tracé trapézoïdal à flancs montants et descendants, le tracé des flancs de la tension d'excitation ($U_{101, 103, 105}$) présentant une pente finie non évanouissante des flancs (m), la tension d'excitation ($U_{101, 103, 105}$) étant interrompue dans un flanc montant ou descendant du tracé trapézoïdal, et dans lequel, au moment de l'interruption, la tension d'excitation ($U_{101, 103, 105}$) présente une valeur différente de zéro ;
absorber (203) une tension ($U_{IND}$) induite par le rotor magnétique (107) dans ladite au moins une bobine d'excitation (101, 103, 105) ;
rétablir (205) la tension d'excitation ($U_{101, 103, 105}$) à une valeur différente de zéro selon le flanc montant ou descendant du tracé trapézoïdal ;
le procédé étant **caractérisé par** la détermination (207) d'une position de rotor du rotor (107) par rapport à ladite au moins une bobine d'excitation (101, 103, 105) sur la base d'un écart déterminé entre la tension induite ($U_{IND}$) absorbée et la tension d'excitation ($U_{101, 103, 105}$) du flanc montant ou descendant du tracé trapézoïdal.

**2.** Procédé (200) selon la revendication 1, dans lequel la tension d'excitation ($U_{101, 103, 105}$) est interrompue pour une pluralité de premiers instants ($t_1$) et est rétablie pour une pluralité de deuxièmes instants ($t_2$), dans lequel, pour chaque interruption de la tension d'excitation ($U_{101, 103, 105}$) entre les premiers instants ($t_1$) et les deuxièmes instants ($t_2$), la tension induite ($U_{IND}$) est absorbée, et pour chaque tension induite ($U_{IND}$) absorbée, une position de rotor est déterminée.

**3.** Procédé (200) selon l'une quelconque des revendications précédentes, dans lequel le stator (109) du moteur BLDC (100) présente une pluralité de bobines d'excitation (101, 103, 105) auxquelles une tension d'excitation ($U_{101, 103, 105}$) est appliquée respectivement, dans lequel, pour chacune des bobines d'excitation (101, 103, 105), la tension d'excitation ($U_{101, 103, 105}$) est interrompue successivement dans le temps, et pendant l'interruption, une tension induite ($U_{IND}$) dans la bobine d'excitation (101, 103, 105) respective est absorbée, et dans lequel, pour chaque tension induite ($U_{IND}$) absorbée, une position de rotor est déterminée.

**4.** Procédé (200) selon l'une quelconque des revendications précédentes, dans lequel l'étape de procédé de la détermination (207) d'une position de rotor comprend les étapes de procédé consistant à :

comparer (501) la tension induite ($U_{IND}$ ($t_{EMF}$)) absorbée à un instant de mesure ($t_{EMF}$) avec une tension induite attendue $\left(U_{IND}^{EXP}\left(t_{EMF}\right)\right)$ pour l'instant de mesure ($t_{EMF}$) et pour une position de rotor à laquelle la commutation trapézoïdale (K1) est adaptée de façon optimale ;
former (503) une différence ($\Delta$U) entre la tension induite ($U_{IND}$($t_{EMF}$)) et la tension induite attendue $\left(U_{IND}^{EXP}\left(t_{EMF}\right)\right)$ ; et
déterminer (505) une erreur de commutation ($\Delta$t), l'erreur de commutation ($\Delta$t) correspondant à une différence de temps ($t_{EMF}$)-($t_3$) entre l'instant de mesure ($t_{EMF}$) et un troisième instant ($t_3$), et dans lequel, pour le troisième instant ($t_3$), la tension induite attendue $\left(U_{IND}^{EXP}\left(t_3\right)\right)$ est égale à la tension induite ($U_{IND}$($t_{EMF}$)) à l'instant de mesure ($t_{EMF}$), selon : ($U_{IND}$($t_{EMF}$))= $\left(U_{IND}^{EXP}\left(t_3\right)\right)$ ; et
dériver (507) la position de rotor à partir de la différence formée ($\Delta$U) et de l'erreur de commutation ($\Delta$t) .

**5.** Procédé (200) selon la revendication 4, dans lequel la tension induite attendue $\left(U_{IND}^{EXP}\right)$ correspond à la tension d'excitation ($U_{101}$, $U_{103}$, $U_{105}$).

**6.** Procédé (200) selon la revendication 4, dans lequel la tension induite attendue $\left(U_{IND}^{EXP}\right)$ est extraite d'une base de données.

7. Procédé (200) selon l'une quelconque des revendications précédentes, dans lequel la tension induite ($U_{IND}$) dans ladite au moins une bobine d'excitation (101, 103, 105) présente un profil trapézoïdal ou sinusoïdal.

8. Procédé (700) permettant de faire démarrer un moteur BLDC (100), comprenant :

une phase initiale (701), dans lequel, dans la phase initiale, le moteur BLDC (100) est démarré avec une commutation (K1) imposée prédéterminée, et le rotor (107) est accéléré jusqu'à une vitesse de rotor qui permet d'absorber (203) une tension induite ($U_{IND}$) par le rotor tournant (107) dans ladite au moins une bobine d'excitation (101, 103, 105) ;
une phase de mesure (703), dans lequel, dans la phase de mesure, lorsque la vitesse de rotor est atteinte, les étapes de procédé du procédé (200) permettant de déterminer une position de rotor selon l'une quelconque des revendications précédentes 1 à 7 sont exécutées, et dans lequel, après chaque détermination (207) d'une position de rotor selon le procédé (200) permettant de déterminer une position de rotor selon l'une quelconque des revendications précédentes 1 à 7, une adaptation (707) de la commutation (K1) à la position de rotor déterminée est effectuée ; et
une phase de fonctionnement (705), dans lequel, dans la phase de fonctionnement, lorsqu'un instant de transformation ($t_\ddot{U}$) est atteint pour une accélération supplémentaire et pour le fonctionnement du moteur BLDC (100), la commutation (K1) est transformée en commutation en bloc (BK).

9. Procédé (700) permettant de faire démarrer un moteur BLDC (100) selon la revendication 8, dans lequel la phase de fonctionnement (705) comprend les étapes de procédé consistant à :

absorber (803) la tension induite ($U_{IND}$) dans ladite au moins une bobine d'excitation (101, 103, 105) ;
déterminer (805) une position de rotor par rapport à au moins une bobine d'excitation (101, 103, 105) à l'aide de la tension induite ($U_{IND}$) absorbée ; et
adapter (707) la commutation à la position de rotor.

10. Procédé (700) permettant de faire démarrer un moteur BLDC (100) selon la revendication 8 ou 9, dans lequel l'instant de transformation ($t_\ddot{U}$) est déterminé par le fait qu'une vitesse de rotation prédéterminée du moteur BLDC (100) soit atteinte et/ou par le fait qu'une valeur limite prédéterminée de l'erreur de commutation ($\Delta t$) soit atteinte.

11. Procédé (700) permettant de faire démarrer un moteur BLDC (100) selon la revendication 8, 9 ou 10, dans lequel l'adaptation (707) de la commutation (K1) comprend une minimisation (801) de l'erreur de commutation ($\Delta t$).

12. Moteur BLDC (100) comprenant un dispositif de commande (111) qui est conçu pour exécuter un procédé (200) de détermination d'une position de rotor selon l'une quelconque des revendications précédentes 1 à 7 et/ou un procédé (700) permettant de faire démarrer un moteur BLDC (100) selon l'une quelconque des revendications 8 à 11.

EP 3 864 746 B1

**Fig. 1**

**Fig. 2**

## Fig. 3

Fig. 4

U$_{101}$

m

A

U$_0$

U$_{IND}$

U$_{IND}$

U$_{103}$

101

U$_0$

U

103

U$_0$

U$_{IND}$

105

U$_{105}$

t

EP 3 864 746 B1

Fig. 5

Fig. 6

25

**Fig. 7**

```
700 →     ┌─────────────┐
          │     701     │
          └─────────────┘
                 │
                 ▼
          ┌─────────────┐
          │ ┌─────────┐ │
          │ │   707   │ │
          │ └─────────┘ │
          └─────────────┘ ⌐ 703
                 │
                 ▼
          ┌─────────────┐
          │             │
          │     705     │
          │             │
          └─────────────┘
```

**Fig. 8**

```
700 →     ┌─────────────┐
          │     701     │
          └─────────────┘
                 │
                 ▼
          ┌─────────────┐⌐ 707
          │ ┌─────────┐ │
          │ │  ┌───┐  │ │
          │ │  │801│  │ │
          │ │  └───┘  │ │
          │ └─────────┘ │
          └─────────────┘ ⌐ 703
                 │
                 ▼
          ┌─────────────┐
          │ ┌─────────┐ │
          │ │   803   │ │
          │ └─────────┘ │
          │     │       │⌐ 705
          │ ┌─────────┐ │
          │ │   805   │ │
          │ └─────────┘ │
          │     │       │
          │ ┌─────────┐ │
          │ │   707   │ │
          │ └─────────┘ │
          └─────────────┘
```

EP 3 864 746 B1

Fig. 9

EP 3 864 746 B1

Fig. 10

EP 3 864 746 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 9190940 B2
- US 8159162 B2
- US 8159162 B
- EP 2596577 B1
- US 8093847 B2
- EP 2037567 A2
- DE 102014001184 A1
- US 2012049777 A1